(19) Europäisches Patentamt
European Patent Office
Office européen des brevets

(11) EP 0 742 389 B1

(12) EUROPEAN PATENT SPECIFICATION

(45) Date of publication and mention of the grant of the patent:
**04.10.2001 Bulletin 2001/40**

(51) Int Cl.[7]: **F16H 61/06**

(21) Application number: **96107401.0**

(22) Date of filing: **09.05.1996**

# (54) Control system for an automatic transmission

Steuerung für ein automatisches Getriebe

Système de commmande pour une transmission automatique

(84) Designated Contracting States:
**DE GB**

(30) Priority: **12.05.1995 JP 11501495**

(43) Date of publication of application:
**13.11.1996 Bulletin 1996/46**

(73) Proprietor: **AISIN AW CO., LTD.**
**Anjo-shi Aichi-ken (JP)**

(72) Inventors:
- **Kousaka, Yuuki**
  **Anjo-shi, Aichi-ken, 444-11 (JP)**
- **Hayabuchi, Masahiro**
  **Anjo-shi, Aichi-ken, 444-11 (JP)**
- **Yamamoto, Yoshihisa**
  **Anjo-shi, Aichi-ken, 444-11 (JP)**
- **Tsutsui, Hiroshi**
  **Anjo-shi, Aichi-ken, 444-11 (JP)**
- **Fujita, Yasuhiro**
  **Anjo-shi, Aichi-ken, 444-11 (JP)**

(74) Representative: **VOSSIUS & PARTNER**
**Siebertstrasse 4**
**81675 München (DE)**

(56) References cited:
**EP-A- 0 479 349** **EP-A- 0 545 298**
**EP-A- 0 588 443** **EP-A- 0 588 627**
**US-A- 4 989 471** **US-A- 5 337 871**
**US-A- 5 343 782** **US-A- 5 363 724**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 742 389 B1

## Description

The present invention relates to an automatic transmission of a vehicle and, more particularly, to a control system for the automatic transmission.

In the prior art, a automatic transmission is provided with a torque converter acting as a fluid transmission unit for receiving the rotation generated by an engine, and a speed change unit for changing the speed of the rotation transmitted from the torque converter. The speed change unit is equipped with a planetary gear unit composed of a plurality of gear elements, so that it may change the speed in accordance with the shift pattern which is set in advance in a manner to correspond to a vehicle speed and a throttle opening.

The automatic transmission is enabled to select a P (parking) range, an R (reverse) range, an N (neutral) range, a D (drive) range, a 3rd (third) range, a 2nd (second) range, a 1st (low) range. When the range is to be changed (as will be called the "N-D change") by operating a speed selecting unit such as a shift lever from the N-range to a forward running range such as the D-range, the 3rd range, the 2nd range or the 1st range, the oil pressure to be fed to the hydraulic servo of a first clutch has to be raised. In this case, the oil pressure to be fed to the hydraulic servo is raised not abruptly but according to predetermined characteristics once it is raised to an initial application pressure (as disclosed in JP-A-28571/1991).

If, in this case, the initial application pressure is set to such a value that the power transmission by the first clutch is started when the piston stroke of the hydraulic servo disappears, the first clutch is not abruptly applied, but the useless time after disappearance of the piston stroke can be shortened to eliminate the delay in the engagement.

In the control system for an automatic transmission described above, however, the oil pressure at the instant when the piston stroke of the hydraulic servo disappears to start the application of the first clutch is varied by the dispersion in the urging force of a return spring for pushing the piston of the hydraulic servo. Even if an electric signal is outputted to generate a target oil pressure for starting the application of the first clutch, the actual oil pressure to be fed to the hydraulic servo is varied by the dispersion in the hydraulic control system.

This makes it difficult to generate an initial application pressure, as preset. If this initial application pressure is excessively low, the time period from the start to the end of the application of the first clutch is elongated. If, on the other hand, the accelerator pedal is depressed simultaneously with the N-D change (as will be called the "N-D simultaneous depression"), the application of the first clutch is delayed, although the throttle opening increases, so that the first clutch is applied after the racing of the engine, to cause a application shock.

Under an excessively high initial application pressure, on the other hand, the application of the first clutch is abruptly started to cause the application shock.

From US-A-5 337 871 a vehicle powershift transmission is known. Communication of lube oil is controlled as a function of the engagement state of a clutch pack. The hydraulic control pressure required to initially engage the clutch pack is determined or calibrated by a method wherein the lube oil pressure is monitored while the clutch control pressure is gradually increased. When the lube oil pressure reaches a certain level corresponding to clutch pack engagement, the current value of the control pressure is saved as the calibration pressure.

Furthermore, US-A-4 989 471 relates to a method of calibrating clutches in transmissions. This method of calibrating final drive clutches in the transmission includes braking the output shaft of the transmission so that any engagement of the selected final drive clutch being calibrated will cause a load to be applied to the engine. The hydraulic pressure is then incrementally increased until the engine RPM's decrease because of the load being placed on the engine.

Eeach of the documents cited before discloses all features of the preamble of claim 1 of the invention.

The present invention has an object to solve the aforementioned problems of the control system for an automatic transmission of the prior art and to provide a control system for an automatic transmission, which can produce an initial application pressure, as preset.

The object is achieved by the features of the claims.

The present invention will be described in detail in the following in connection with its embodiments with reference to the accompanying drawings.

Fig. 1 is a functional block diagram of a control system of an automatic transmission in an embodiment of the present invention;

Fig. 2 is a schematic diagram of the automatic transmission in the embodiment of the present invention;

Fig. 3 is a table enumerating the operations of the automatic transmission in the embodiment of the present invention;

Fig. 4 is a first diagram showing a hydraulic control unit in the embodiment of the present invention;

Fig. 5 is a second diagram showing a hydraulic control unit in the embodiment of the present invention;

Fig. 6 is a main flow chart illustrating the operations of the automatic transmission control system in the embodiment of the present invention;

Fig. 7 is a first flow chart of an N-D change control routine in the embodiment of the present invention;

Fig. 8 is a second flow chart of the N-D change control routine in the embodiment of the present invention;

Fig. 9 is a diagram illustrating a map of a relation between an input torque and a C-1 oil pressure in the embodiment of the present invention;

Fig. 10 is a diagram illustrating a map of a relation between an engine RPM and the C-1 oil pressure in the embodiment of the present invention;

Fig. 11 is a diagram illustrating a map of a relation between a throttle opening and the C-1 oil pressure in the embodiment of the present invention;

Fig. 12 is a time chart of the N-D change control in the embodiment of the present invention;

Fig. 13 is a diagram illustrating a relation between the engine RPM and an additional pressure in the embodiment of the present invention;

Fig. 14 is a flow chart of a neutral control routine in the embodiment of the present invention;

Fig. 15 is a time chart of an automatic transmission control system in the embodiment of the present invention;

Fig. 16 is a first flow chart of a first clutch release control routine in the embodiment of the present invention;

Fig. 17 is a second flow chart of the first clutch release control routine in the embodiment of the present invention;

Fig. 18 is a diagram of relations between an engine RPM, and an input torque and a throttle pressure in the embodiment of the present invention;

Fig. 19 is a flow chart of a zero vehicle speed estimating routine in the embodiment of the present invention;

Fig. 20 is a diagram for explaining the state of a clutch in the embodiment of the present invention;

Fig. 21 is a time chart when the first clutch in the embodiment of the present invention is in a drag region;

Fig. 22 is a time chart when the first clutch in the embodiment of the present invention is in a slip region;

Fig. 23 is a first flow chart of an in-neutral control routine in the embodiment of the present invention;

Fig. 24 is a second flow chart of an in-neutral control routine in the embodiment of the present invention;

Fig. 25 is a flow chart of a threshold value updating routine in the embodiment of the present invention;

Fig. 26 is a first flow chart of a first clutch application control routine in the embodiment of the present invention;

Fig. 27 is a second flow chart of a first clutch application control routine in the embodiment of the present invention; and

Fig. 28 is a diagram of a relation between a throttle opening and a set value in the embodiment of the present invention.

In Fig. 1 reference numeral 10 designates an engine; numeral 16 a speed change unit; and characters C1 a first clutch acting as the clutch which is applied, when a forward running range is selected, to transmit the rotation from the engine 10 to the transmission mechanism of the speed change unit 16.

Moreover, an automatic transmission control system 41 acting as the control system controls an oil pressure to be fed to a hydraulic servo C-1 to apply/release the first clutch C1.

The automatic transmission control system 41 is provided with: application starting pressure detecting means 101 for detecting an application starting pressure at the instant when the application of the first clutch C1 is started; initial application pressure setting means 104 for setting an initial application pressure on the basis of the application starting pressure detected by the application starting pressure detecting means 101; and oil pressure adjusting means 103 for setting the oil pressure to be fed to the hydraulic servo C-1, when the change is made to the forward running range, and for raising the same pressure gradually.

Fig. 2 is a schematic diagram of the automatic transmission in the embodiment of the present invention, and Fig. 3 is a table enumerating the operations of the automatic transmission in the embodiment of the present invention.

As shown, the rotation, as generated by the engine 10, is transmitted through an output shaft 11 to the torque converter 12. This torque converter 12 transmits the rotation of the engine 10 to an output shaft 14 through a fluid (or working oil) but is enabled to transmit the rotation directly to the output shaft 14, when the vehicle speed exceeds a predetermined value so that a lockup clutch L/C is applied.

To the output shaft 14, there is connected the speed change unit 16 for establishing four forward and one reverse speeds. This speed change unit 16 is constructed to include a main transmission 18 for three forward and one reverse speeds and an under-drive auxiliary transmission 19. Moreover, the rotation of the main transmission 18 is transmitted through a counter drive gear 21 and a counter driven gear 22 to the auxiliary transmission 19, and the rotation of the output shaft 23 of the auxiliary transmission 19 is transmitted through an output gear 24 and a ring gear 25 to a differential mechanism 26.

In this differential mechanism 26, the rotation, as transmitted through the output gear 24 and the ring gear 25, is differentiated so that the differential rotations are transmitted through lefthand and righthand drive shafts 27 and 28 to the not-shown drive wheels.

The main transmission 18 is equipped with a first planetary gear unit 31 and a second planetary gear unit 32 and further with the first clutch C1, a second clutch C2, a first brake B1, a second brake B2, a third brake B3 and a one-way clutch F1 and a one-way clutch F2 for transmitting the torque selectively between the individual elements of the two planetary gear units 31 and 32.

The first planetary gear unit 31 is composed of: a ring gear $R_1$ connected to a drive unit casing 34 through the third brake B3 and the one-way clutch F2 which are arranged in parallel with each other; a sun gear $S_1$ formed on a sun gear shaft 36 fitted on and rotatably supported by the output shaft 14; a carrier $CR_1$ connected to the counter drive gear 21; and pinions $P_{1A}$ and $P_{1B}$ meshing between the ring gear $R_1$ and the sun gear $S_1$ and rotatably supported by the carrier $CR_1$.

Moreover, the sun gear shaft 36 is connected through the second clutch C2 to the output shaft 14. The sun gear shaft 36 is further connected through the first brake B1 to the drive unit casing 34 and through the one-way clutch F1 and the second brake B2, as arranged in series, to the drive unit casing 34.

On the other hand, the second planetary gear unit 32 is composed of: a ring gear $R_2$ connected through the first clutch C1 to the output shaft 14; a sun gear $S_2$ formed on the sun gear shaft 36 integrally with the sun gear $S_1$; a carrier $CR_2$ connected to the carrier $CR_1$; and a pinion $P_2$ meshing between the ring gear $R_2$ and the sun gear $S_2$, rotatably supported by the carrier $CR_2$ and formed integrally with the pinion $P_{1B}$.

Moreover, the counter drive gear 21 is made to mesh with the counter driven gear 22 arranged in the auxiliary transmission 19, to transmit the rotation, as has its speed changed by the main transmission 18, to the auxiliary transmission 19.

This auxiliary transmission 19 is equipped with a third planetary gear unit 38 and with a third clutch C3, a fourth brake B4 and a one-way clutch F3 for transmitting the torque selectively between the individual elements of the third planetary gear unit 38.

The third planetary gear unit 38 is composed of: a ring gear $R_3$ connected to the counter driven gear 22; a sun gear $S_3$ formed on a sun gear shaft 39 rotatably fitted on the output shaft 23; a carrier $CR_3$ fixed on the output shaft 23; and a pinion $P_3$ meshing between the ring gear $R_3$ and the sun gear $S_3$ and rotatably supported by the carrier $CR_3$.

Here will be described the operations of the automatic transmission having the construction thus far described.

Incidentally, in Fig. 3: reference characters S1 designate a first solenoid valve; characters S2 a second solenoid valve; characters S3 a third solenoid valve; characters C1 the first clutch; characters C2 the second clutch; characters C3 the third clutch; characters B1 the first brake; characters B2 the second brake; characters B3 the third brake; characters B4 the fourth brake; and characters F1 to F3 the one-way clutches. Moreover: letter R designates the R-range; letter N the N-range; letter D the D-range; characters 1ST a 1st-speed gear stage; characters 2ND a 2nd-speed gear stage; characters 3RD a 3rd-speed gear stage; and characters 4TH a 4th-speed gear stage.

Moreover, symbol ○ indicates that a first solenoid signal $S_1$, a second solenoid signal $S_2$ and a third solenoid signal $S_3$ for opening/closing the first solenoid valve S1, the second solenoid valve S2 and the third solenoid valve S3 respectively are ON, that the first clutch C1, the second clutch C2, the third clutch C3, the first brake B1, the second brake B2, the third brake B3 and the fourth brake B4 are applied, and that the one-way clutches F1 to F3 are locked. On the other hand, symbol X indicates that the first solenoid signal $S_1$, the second solenoid signal $S_2$ and the third solenoid signal $S_3$ for opening/closing the first solenoid valve S1, the second solenoid valve S2 and the third solenoid valve S3 are OFF, that the first clutch C1, the second clutch C2, the third clutch C3, the first brake B1, the second brake B2, the third brake B3 and the fourth brake B4 are released, and that the one-way clutches F1 to F3 are free.

Incidentally, symbol $\Delta$ indicates the state in which the first solenoid signal $S_1$, the second solenoid signal $S_2$ and the third solenoid signal $S_3$ for turning ON/OFF the first solenoid valve S1, the second solenoid valve S2 and the third solenoid valve S3 when the neutral control state is established, and symbol (○) indicates that the third brake B3 is applied at the engine brake time.

At the 1st speed in the D-range, the first clutch C1 and the fourth brake B4 are applied to lock the one-way clutches F2 and F3. Then, the rotation of the output shaft 14 is transmitted through the first clutch C1 to the ring gear $R_2$. In this state, the rotation of the ring gear $R_1$ is blocked by the one-way clutch F2 so that the carrier $CR_2$ is drastically decelerated to rotate, while rotating the sun gear $S_2$ idly, and to transmit its rotation to the counter driven gear 21.

The rotation, as transmitted from the counter drive gear 21 to the counter driven gear 22, is transmitted to the ring gear $R_3$. However, the rotation of the sun gear $S_3$ is blocked by the fourth brake B4 so that the rotation of the carrier $CR_3$ is further decelerated and transmitted to the output shaft 23.

At the 2nd speed in the D-range, on the other hand, the first clutch C1, the first brake B1, the second brake B2 and the fourth brake B4 are applied to lock the one-way clutches F1 and F3. Then, the rotation of the output shaft 14 is transmitted through the first clutch C1 to the ring gear $R_2$. The rotation of this ring gear $R_2$ is decelerated and transmitted to the carrier $CR_2$, because the rotation of the sun gear $S_2$ is blocked by the second brake B2 and the one-way clutch F1. The rotation of the carrier $CR_2$ is transmitted to the counter drive gear 21 while rotating the ring gear $R_1$ idly.

The rotation, as transmitted from the counter drive gear 21 to the counter driven gear 22, is transmitted to the ring gear $R_3$. However, the rotation of the sun gear $S_3$ is blocked by the fourth brake B4 so that the rotation of the carrier $CR_3$ is decelerated and transmitted to the output shaft 23.

Next, at the 3rd speed in the D-range, the first clutch C1, the third clutch C3, the first brake B1 and the second brake B2 are applied to lock the one-way clutch F1. Then, the rotation of the output shaft 14 is transmitted through the first clutch C1 to the ring gear $R_2$. The

rotation of this ring gear $R_2$ is decelerated and transmitted to the carrier $CR_2$ because the rotation of the sun gear $S_2$ is blocked by the second brake B2 and the one-way clutch F1. The rotation of the carrier $CR_2$ is transmitted to the counter drive gear 21 while rotating the ring gear $R_1$ idly.

The rotation, as transmitted from the counter drive gear 21 to the counter driven gear 22, is transmitted to the ring gear $R_3$. However, the relative rotation between the carrier $CR_3$ and the sun gear $S_3$ is blocked by the third clutch C3 so that the third planetary gear unit 38 comes into a direct-coupled state. As a result, the rotation of the counter driven gear 22 is unchangedly transmitted to the output shaft 23.

Next, at the 4th speed in the D-range, the first clutch C1, the second clutch C2, the third clutch C3 and the second brake B2 are applied. Then, the rotation of the output shaft 14 is transmitted through the first clutch C1 to the ring gear $R_2$ and through the second clutch C2 to the sun gear $S_2$ to bring the first planetary gear unit 31 and the second planetary gear unit 32 into direct-coupled states. As a result, the rotation of the output shaft 11 is unchangedly transmitted to the counter drive gear 21.

The rotation, as transmitted from the counter drive gear 21 to the counter driven gear 22, is transmitted to the ring gear $R_3$. However, the relative rotation between the carrier $CR_3$ and the sun gear $S_3$ is blocked by the third clutch C3 so that the third planetary gear unit 38 comes into the direct-coupled state. As a result, the rotation of the counter driven gear 22 is unchangedly transmitted to the output shaft 23.

Incidentally, the automatic transmission is provided with a hydraulic control unit 40 for establishing the individual gear stages by applying/releasing the first clutch C1, the second clutch C2, the third clutch C3, the first brake B1, the second brake B2, the third brake B3 and the fourth brake B4.

Moreover, the hydraulic control unit 40 and the engine control unit 43 are connected with the automatic transmission control system (ECU) 41 so that they are operated according to the control program of the automatic transmission control system 41.

With this automatic transmission control system 41, on the other hand, there are individually connected a neutral start switch (N.S.S.W.) 45, an oil temperature sensor 46 acting as oil temperature detecting means, a RPM sensor 47 acting as output RPM detecting means, a brake switch 48, an engine RPM sensor 49 acting as input RPM detecting means and torque detecting means, a throttle opening sensor 50 and a vehicle speed sensor 51.

Moreover, the shift position of the not-shown shift lever, i.e., the selected range can be detected by the neutral start switch 45. The temperature of the oil in the hydraulic control unit 40 can be detected by the oil temperature sensor 46. A clutch input side RPM $N_{C1}$ can be detected as the output RPM of the torque converter 12 by the RPM sensor 47.

Furthermore, whether or not the not-shown brake pedal is depressed can be detected by the brake switch 48. An engine RPM $N_E$ can be detected as the output RPM of the torque converter 12 by the engine RPM sensor 49. The throttle opening θ can be detected by the throttle opening sensor 50. The output side RPM (as will be called the "speed change unit side output RPM") of the speed change unit 16, namely, the vehicle speed can be detected by the vehicle speed sensor 51.

Here will be described the hydraulic control unit 40.

Fig. 4 is a first diagram showing a hydraulic control unit in the embodiment of the present invention. and Fig. 5 is a second diagram showing a hydraulic control unit in the embodiment of the present invention.

In these Figures, a primary valve 59 regulates the oil pressure coming from a not-shown oil pressure source and outputs it as a line pressure to an oil line L-21. Moreover, a manual valve 55 is provided with ports 1, 2, 3, D, $P_L$ and R so that the line pressure, as fed from the primary valve 59 through oil lines L-21 and L-4 to the port $P_L$, is established as a 1-range pressure, a 2-range pressure, a 3-range pressure, a forward running range pressure (as will be called the "D-range pressure") and an R-range pressure at the respective ports 1, 2, 3, D and R by manipulating the not-shown shift lever.

When this shift lever is placed in the forward running range position, the D-range pressure oil, as established in the port D, is fed through an oil line L-1 to the second solenoid valve S2, through an oil line L-2 to a 1-2 shift valve 57, and through an oil line L-3 to a B-1 sequence valve 56. On the other hand, the line pressure from the primary valve 59 is fed through the oil line L-21 to the third solenoid valve S3.

Moreover, the line pressure from the oil line L-21 is fed through the oil line L-4 to a solenoid modulator valve 58 and through an oil line L-5 to the first solenoid valve S1 and a 2-3 shift valve 60.

The first solenoid signal $S_1$, the second solenoid signal $S_2$ and the third solenoid signal $S_3$ for opening/closing the first solenoid valve S1, the second solenoid valve S2 and the third solenoid valve S3 are turned ON/OFF in response to a change-over signal coming from the automatic transmission control system 41 (Fig. 2). As a result, the first solenoid valve S1 feeds a signal oil pressure through an oil line L-8 to the 1-2 shift valve 57 and a 3-4 shift valve 62. The second solenoid valve S2 feeds a signal oil pressure through an oil line L-9 to the 2-3 shift valve 60. The third solenoid valve S3 feeds a change-over signal oil pressure through an oil line L-10 to a neutral relay valve 64.

The 1-2 shift valve 57 takes its upper half position (as located above the spool) at the 1st speed and its lower half position (as located below the spool) at the 2nd to 4th speeds. The 2-3 shift valve 60 takes its lower half position at the 1st and 2nd speeds and its upper half position at the 3rd and 4th speeds. The 3-4 shift valve 62 takes its upper half position at the 1st and 4th speeds and its lower half position at the 2nd and 3rd speeds. The neutral relay valve 64 takes its upper half position at the neutral control time and its lower half position at the 1st to 4th speeds.

The solenoid modulator valve 58 is connected through an oil line L-12 to a linear solenoid valve 66, which is connected through an oil line L-13 to a C-1 control valve 67. The linear solenoid valve 66 is further connected through an oil line L-22 to the primary valve 59.

Moreover, the linear solenoid valve 66 is controlled by a control signal received from the automatic transmission control system 41, to feed a throttle pressure $P_{TH}$ as the control signal oil pressure through the oil line L-13 to the C-1 control valve 67. This C-1 control valve 67 is fed with the D-range pressure through the oil lines L-3 and L-14 so that it controls the fed D-range pressure to the control oil pressure (as will be called the "C-1 oil pressure") $P_{C1}$ of the hydraulic servo C-1, as corresponding to the throttle pressure $P_{TH}$ coming from the linear solenoid valve 66, and feeds it to an oil line L-15.

In the B-1 sequence valve 56, a spring is arranged at the lefthand end of the drawing whereas a control oil chamber is formed at the righthand end of the drawing, and the spring applies a spring load to the spool. Moreover, the B-1 sequence valve 56 is caused at the 1st speed to take its lower half position in response to the D-range pressure it receives at the control oil chamber through the oil line L-3. When the oil pressure is fed at the 2nd speed to a hydraulic servo B-2 so that it rises, the B-1 sequence valve 56 receives the sequence pressure from the hydraulic servo B-2 so that it is caused to take its upper half position by having its spool pushed rightward by the sequence pressure and the spring load.

As a result, the oil pressure from the 1-2 shift valve 57 is fed through the B-1 sequence valve 56 to the 3-4 shift valve 62 and further through the 1-2 shift valve 57 and the neutral relay valve 64 to the hydraulic servo B-1. Thus, the oil pressure is fed to the hydraulic servo B-1 in response to the rise of the oil pressure in the hydraulic servo B-2.

Incidentally, the neutral relay valve 64 takes its upper half position in the neutral control state. In this neutral control, therefore, the C-1 oil pressure $P_{C1}$, as established in the oil line L-15, is fed through an oil line L-16, the neutral relay valve 64 and an oil line L-17 to the hydraulic servo C-1. The oil under the C-1 oil pressure $P_{C1}$ is fed through oil lines L-23 and L-24 to a B-1 control valve 70.

At the 1st to 4th speeds, moreover, the neutral relay valve 64 takes its lower half position. At the 1st to 4th speeds, therefore, the oil under the D-range pressure is fed through the oil line L-3, the neutral relay valve 64 and the oil line L-17 to the hydraulic servo C-1. In the neutral control state, moreover, the neutral relay valve 64 is switched to its upper half position to connect the oil line L-16 and the oil line L-17.

Incidentally, numeral 68 designates a damper valve which is arranged in the oil line L-17 for smoothing the release of the oil from the hydraulic servo C-1, and characters B-4 designate a hydraulic servo of the fourth brake B4 (Fig. 3).

Here will be described the operations of the automatic transmission control system.

Fig. 6 is a main flow chart illustrating the operations of the automatic transmission control system in the embodiment of the present invention.

In this case, simultaneously as the ignition of the engine 10 (Fig. 2) is turned ON, the main flow is started to repeat the N-D change control and the neutral control till the ignition is turned OFF.

Step S1: The N-D change control is executed.
Step S2: The neutral control is executed.

Here will be described the N-D change control sub-routine at Step S1 of Fig. 6.

Fig. 7 is a first flow chart of an N-D change control routine in the embodiment of the present invention; Fig. 8 is a second flow chart of the N-D change control routine in the embodiment of the present invention; Fig. 9 is a diagram illustrating a map of a relation between an input torque and a C-1 oil pressure in the embodiment of the present invention; Fig. 10 is a diagram illustrating a map of a relation between an engine RPM and the C-1 oil pressure in the embodiment of the present invention; Fig. 11 is a diagram illustrating a map of a relation between a throttle opening and the C-1 oil pressure in the embodiment of the present invention; Fig. 12 is a time chart of the N-D change control in the embodiment of the present invention; and Fig. 13 is a diagram illustrating a relation between the engine RPM and an additional pressure in the embodiment of the present invention. Incidentally, in Fig. 9, the abscissa indicates the input torque, and the ordinate indicates the C-1 oil pressure $P_{C1}$. In Fig. 10, the abscissa indicates the engine RPM $N_E$, and the ordinates the C-1 oil pressure $P_{C1}$. In Fig. 11, the abscissa indicates the throttle opening $\theta$, and the ordinate indicates the C-1 oil pressure $P_{C1}$. In Fig. 13, the abscissa indicates the engine RPM $N_E$, and the ordinate indicates an additional pressure $P_{C1S}$.

If, in this case, the driver performs the N-D change operation, the additional pressure $P_{C1S}$ is added to a reference C-1 oil pressure $P_{C1m}$, as obtained in the neutral control of Step S2, so that the resultant C-1 oil pressure $P_{C1}$ is fed to the hydraulic servo C-1 (Fig. 5) to bring the first clutch C1 (Fig. 2) into a partially applied state. Subsequently, the C-1 oil pressure $P_{C1}$ is swept up to bring the first clutch C1 into a completely applied state.

Step S1-1: It is decided on the basis of the signal coming from the neutral start switch 45 whether or not the N-D control has been performed by the starting operation of the driver. Simultaneously with this, the timing of the first timer is started. The routine advances to Step S1-2, if the N-D change is performed, but the N-D change control is ended if the N-D change is not performed.

Step S1-2: The clutch input side RPM $N_{C1}$ at the N-D changing time is detected and set as a value $N_{(1)}$.

Step S1-3: The third solenoid signal $S_3$ for opening/closing the third solenoid valve S3 is turned ON. This third solenoid signal $S_3$ is outputted from the automatic transmission control system 41.

Step S1-4: The application starting pressure detecting means 101 (Fig. 1) determines the C-1 oil pressure $P_{C1}$ to be fed at first to the hydraulic servo C-1 so as to bring the first clutch C1 into a partially applied state, and the initial application pressure setting means 104 sets the C-1 oil pressure $P_{C1}$ as the initial application pressure.

For this, the application starting pressure detecting means 101 determines the C-1 oil pressure $P_{C1}$ corresponding to the input torque with reference to the map of Fig. 9 in the case of the N-D change control immediately after the ignition has been turned ON. On the other hand, the C-1 oil pressure $P_{C1}$ can also be determined with reference to the map of Fig. 10 at the idling ON time or to the map of Fig. 11 at the idling OFF time.

On the other hand, in the case of the N-D change control after the neutral control of Step S2, that is, if the N-range is selected once the neutral control was made and is followed by the N-D change control, the application starting pressure detecting means 101 determines the C-1 oil pressure $P_{C1}$ by adding the additional pressure $P_{C1S}$ to the reference C-1 oil pressure $P_{C1m}$ which is obtained in the neutral control, as shown in Fig. 12, from the following formula:

$$P_{C1} = P_{C1m} + P_{C1S}.$$

Incidentally, in the aforementioned neutral control, the C-1 oil pressure $P_{C1}$ is repeatedly raised and lowered, as will be described hereinafter, but the C-1 oil pressure $P_{C1}$ before lowered is employed as the aforementioned reference C-1 oil pressure $P_{C1m}$.

Incidentally, in the neutral control, the C-1 oil pressure $P_{C1}$ before lowered is used as the reference C-1 oil pressure $P_{C1m}$ so that the reference C-1 oil pressure $P_{C1m}$ is the application starting pressure at the instant when the application of the first clutch C1 is actually started. As a result, the initial application pressure can be properly set even if the actual oil pressure to be fed to the hydraulic servo C-1 is varied by the dispersion in the urging force of a return spring for pushing the piston of the hydraulic servo C-1 or by the dispersion in the hydraulic control system.

As a result, the first clutch C1 can always be stably applied without any delay. Even if the not-shown accelerator pedal is depressed simultaneously with the N-D change, the first clutch C1 is prevented from being applied after the racing of the engine 10. This makes it possible to cause no application shock.

Moreover, the first clutch C1 is not abruptly applied so that the application shock, as might otherwise be caused by the abrupt application of the first clutch C1, can be prevented.

Moreover, the reference C-1 oil pressure $P_{C1m}$ obtained by the neutral control can be utilized as the application starting pressure so that the application starting pressure detecting means 101 need not be especially arranged for the N-D change control. As a result, the automatic transmission control system 41 can be simplified.

Incidentally, the reference C-1 oil pressure $P_{C1m}$ is not basically varied even with a change in the output torque of the engine 10 but becomes the higher for the higher output torque after the application of the first clutch C1 has been started.

When the oil temperature drops, the viscous resistance of the oil increases. Even if the hydraulic control unit 40 outputs such a signal to the linear solenoid valve 66 (Fig. 4) as to establish a predetermined C-1 oil pressure $P_{C1}$, a large delay is caused till the C-1 oil pressure $P_{C1}$ is actually achieved.

Moreover, since the aforementioned C-1 oil pressure $P_{C1m}$ is static, it does not vary even if the oil temperature changes. However, the C-1 oil pressure $P_{C1}$ after the start of the application of the first clutch C1 resultantly drops because the rise in the oil pressure is delayed the more for the lower oil temperature even if the hydraulic control unit 40 outputs a signal at the same level to the linear solenoid valve 66.

As illustrated in Fig. 13, therefore, the aforementioned additional pressure $P_{C1S}$ is raised to the higher level for the higher output torque of the engine 10, i.e., the engine RPM $N_E$. Moreover, the additional pressure $P_{C1S}$ is raised to the higher level for the lower oil temperature to refer to an A region for a high oil temperature, a B region for a medium oil temperature and a C region for a low oil temperature.

As a result, a stably applied state can be established to prevent the application delay and the abrupt application.

Step S1-5: The application detecting means of the automatic transmission control system 41 detects the clutch input side RPM $N_{C1}$ at this time and decides whether or not the residue ($N_{(1)}$ - $N_{C1}$), as calculated by subtracting the clutch input side RPM $N_{C1}$ from the value $N_{(1)}$, is over a set value $\Delta N_{R1}$. The routine advances to Step S1-7, if the value ($N_{(1)}$ - $N_{C1}$) is over the set value $\Delta N_{R1}$, but to Step S1-6 if the value ($N_{(1)}$ - $N_{C1}$) is below the set value $\Delta N_{R1}$.

Incidentally, even if the initial application pressure is set, a predetermined time period is required for the actual C-1 oil pressure $P_{C1}$ fed to the hydraulic servo C-1 to take the initial set pressure.

As a result, if the sweep-up is started immediately after the initial application pressure has been set, the C-1 oil pressure $P_{C1}$ is raised although the C-1 oil pressure $P_{C1}$ in the hydraulic servo C-1 has neither reached the initial application pressure as a matter of fact nor has failed the first clutch C1 to take a predetermined applied state, so that the first clutch C1 is abruptly applied. As a result, the application shock occurs.

Till the first clutch C1 starts its actual engagement, therefore, the aforementioned initial application pressure is held, and the C-1 oil pressure $P_{C1}$ is gradually raised after the actual start of engagement of the first clutch C1. As a result, the first clutch C1 is not abruptly applied so that the application shock can be prevented.

Step S1-6: It is decided whether or not the throttle opening $\theta$ is over a set value $\theta_R$. The routine advances to Step S1-7, if the throttle opening $\theta$ is over the set value $\theta_R$, but returns to Step S1-4 if the throttle opening $\theta$ is below the set value $\theta_R$.

The aforementioned set value $\Delta N_{R1}$ is set to the value at the time when the piston of the hydraulic servo C-1 reaches the piston stroke end so that the first clutch C1 starts its engagement (or grip), and the aforementioned set value $\theta_R$ is set to such a value as to grasp that the driver is starting the start of the vehicle.

Thus, in the state in which the first clutch C1 does not start its engagement yet, the routine advances to Step S1-7 if the accelerator pedal is depressed to enlarge the throttle opening $\theta$.

Step S1-7: The C-1 oil pressure $P_{C1}$ is swept up. This C-1 oil pressure $P_{C1}$ is raised by changing the control signal oil pressure coming from the linear solenoid valve 66. After this, the C-1 oil pressure $P_{C1}$ is raised by a set pressure $\Delta P$ at each lapse of a minute time $\Delta t1$, to continue the engagement of the first clutch C1.

Step S1-8: It is decided whether or not a time $T_1$ by the first timer has elapsed. The routine advances to Step S1-11, if the time $T_1$ has elapsed, but to Step S1-9 if the time $T_1$ has not elapsed.

Step S1-9: It is decided on the basis of the speed change unit output RPM $N_o$ whether or not the engagement of the first clutch C1 has been ended. If, in this case, the gear ratio of the speed change unit 16 is designated by i, the RPM at the output side of the first clutch C1 is estimated to be $N_o \cdot i$. Therefore, the end of engagement is decided if the clutch input side RPM $N_{C1}$ is below the sum of the output side RPM $N_o \cdot i$ and a set value $\Delta N_{R2}$, as expressed by the following inequality:

$$N_{C1} \leqq N_o \cdot i + \Delta N_{R2}.$$

Then, the routine advances to Step S1-11, if the application of the first clutch C1 is ended, but to Step S1-10 if the application of the first clutch C1 is not ended.

Step S1-10: It is decided whether or not the C-1 oil pressure $P_{C1}$ has reached a set value $P_{C1R}$. The routine advances to Step S1-11, if the C-1 oil pressure $P_{C1}$ reaches the set value $P_{C1R}$, but returns to Step S1-5 if the C-1 oil pressure $P_{C1}$ does not reach the set value $P_{C1R}$.

Step S1-11: The third solenoid Signal $S_3$ is turned OFF.

In this N-D change case, the third solenoid signal $S_3$ for opening/closing the third solenoid valve S3 is turned ON to feed the hydraulic servo C-1 with the C-1 oil pressure $P_{C1}$ which is set as the initial application pressure, so that the application of the first clutch C1 is started. As the clutch input side RPM $N_{C1}$ is decreased and as the throttle opening $\theta$ is increased by the driver depressing the accelerator pedal, the C-1 oil pressure $P_{C1}$ is gradually raised.

When the application of the first clutch C1 is thus ended, the third solenoid signal $S_3$ is turned OFF so that the vehicle is started.

Here will be described the neutral control subroutine of Step S2 of Fig. 6.

Fig. 14 is a flow chart of a neutral control routine in the embodiment of the present invention, and Fig. 15 is a time chart of an automatic transmission control system in the embodiment of the present invention. Incidentally, Fig. 15 is invoked in the later description of the individual sub-routines.

Step S2-1: The release means in the automatic transmission control system 41 (Fig. 1) performs the first clutch release control. At this step, a zero vehicle speed is estimated to output the 2nd speed shift output at a set timing so that the applications of the second brake B2 (Fig. 2) and the first brake B1 are started to perform a hill-hold control thereby to sweep down the C-1 oil pressure $P_{C1}$ at a set timing. Moreover, the C-1 oil pressure $P_{C1}$ to be fed to the hydraulic servo C-1 is lowered to release the first clutch C1, till the retraction of the piston of the hydraulic servo C-1 is started.

For this, the engine RPM $N_E$ corresponding to the input torque is determined to output the C-1 oil pressure $P_{C1}$ corresponding to the engine RPM $N_E$, and the C-1 oil pressure $P_{C1}$ is gradually lowered.

Incidentally, the input torque can be detected not only from the engine RPM $N_E$ but also indirectly from the engine air suction or the fuel injection rate. Moreover, the input torque of the speed change unit 16 can also be directly detected by a not-shown torque sensor. In this case, moreover, the torque sensor is attached to the output shaft 14 of the torque converter 12.

Step S2-2: The specific release state holding means in the automatic transmission control system 41 performs an in-neutral control to hold the first clutch C1 in the specific release state. At this step, stabilizations of the engine RPM $N_E$ and the clutch input side RPM $N_{C1}$ are awaited. After these stabilizations, the C-1 oil pressure $P_{C1}$ is raised or lowered by set pressures according to the engine RPM $N_E$ and the clutch input side RPM $N_{C1}$.

Step S2-3: A first clutch application control is executed. At this step, the C-1 oil pressure $P_{C1}$ is raised by set pressures which are set on the basis of the throttle opening θ and the engine RPM $N_E$, to end the movement of the not-shown piston in the piston stroke of the hydraulic servo C-1 (Fig. 5). After the end of the movement of the piston in the piston stroke of the hydraulic servo C-1, the C-1 oil pressure $P_{C1}$ is raised by set pressures to prevent the application shock.

Next, the first clutch release control sub-routine at Step S2-1 of Fig. 14 will be described with reference to Figs. 16 to 18.

Fig. 16 is a first flow chart of a first clutch release control routine in the embodiment of the present invention; Fig. 17 is a second flow chart of the first clutch release control routine in the embodiment of the present invention; and Fig. 18 is a diagram of relations between an engine RPM, and an input torque and a throttle pressure in the embodiment of the present invention. Incidentally, in Fig. 18, the abscissa indicates the engine RPM $N_E$, and the ordinate indicates the intake torque $T_T$ (= $t \cdot C \cdot N_E^2$) and the C-1 oil pressure $P_{C1}$.

Step S2-1-1: The zero vehicle speed is estimated on the basis of the variation of the clutch input side RPM $N_{C1}$.

Step S2-1-2: The stop state detecting means of the automatic transmission control system 41 (Fig. 2) awaits satisfaction of the starting condition for the neutral control. At the same time, the timing of the not-shown second timer is started.

In this case, it is decided that the starting condition is satisfied, if all the following individual conditions are satisfied: that the clutch input side RPM $N_{C1}$ is substantially zero; that the not-shown accelerator pedal is released so that the throttle opening θ is less than a predetermined value; that the oil temperature detected by the oil temperature sensor 46 is higher than a predetermined value; and that the not-shown brake pedal is depressed so that the brake switch 48 is ON. Incidentally, whether or not the clutch input side RPM $N_{C1}$ is substantially zero is decided depending upon whether or not the detection limit of the RPM sensor 47 is detected. In the present embodiment, it is decided that the detection limit is detected, when the actual vehicle speed takes a set value (2 [km/h]).

Step S2-1-3: The lapse of a time period $T_o$ timed by the second timer is awaited, and the sub-routine advances to Step S2-1-4 if the time period $T_o$ elapses. Here, the time period $T_o$ is calculated by the zero vehicle speed estimation step, and the zero vehicle speed is estimated when the time period $T_o$ elapses.

Step S2-1-4: the 2nd-speed shift output for starting the hill-hold control is generated, and the first solenoid signal $S_1$ for opening/closing the first solenoid valve S1 (Fig. 4) is turned ON to feed the oil pressure to the hydraulic servo B-2 thereby to apply the second brake B2. As the oil pressure in the hydraulic servo B-2 rises, moreover, the sequence pressure in the hydraulic servo B-2 is fed to the B-1 sequence valve 56 (Fig. 5) to feed the oil pressure to the hydraulic servo B-1 thereby to apply the first brake B1.

Thus, the hill-hold control is executed to establish the 2nd-speed gear stage in the speed change unit 16 so that the first clutch C1, the first brake B1, the second brake B2 and the fourth brake B4 are applied to lock the one-way clutches F1 and F3. If the vehicle runs backward uphill in this state, a backward rotation is transmitted to the output shaft 23 of the auxiliary transmission 19 to rotate the ring gear $R_1$ forward. However, this forward rotation is blocked by the one-way clutch F2 so that the vehicle does not run backward.

Step S2-1-5: The third solenoid signal $S_3$ is turned ON to switch the neutral relay valve 64 to the upper half position thereby to bring the C-1 oil pressure $P_{C1}$ into a controllable state.

Step S2-1-6: As shown in Fig. 18, the engine RPM $N_E$ corresponding to the input torque $T_T$ is detected to set the value of the engine RPM $N_E$ to a reference engine RPM $N_{Em}$.

Step S2-1-7: The C-1 oil pressure $P_{C1}$ immediately before the first clutch C1 is released according to the engine RPM $N_E$ is established and outputted.

Step S2-1-8: The engine RPM $N_E$ corresponding to the input torque $T_T$ is detected again.

Step S2-1-9: The engine RPM $N_E$ is compared with the reference engine RPM $N_{Em}$ to decide whether or not it has changed. The sub-routine advances to Step S2-1-10, if the answer is YES, but to Step S2-1-11 if NOT.

Step S2-1-10: The value of the engine RPM $N_E$ when it is decided at Step S2-1-9 that the engine RPM $N_E$ has changed from the reference engine RPM $N_{Em}$ is set in the reference engine RPM $N_{Em}$, and the C-1 oil pressure $P_{C1}$ corresponding to the new reference engine RPM $N_{Em}$ is established.

Step S2-1-11: The C-1 oil pressure $P_{C1}$ is lowered (or swept down) by set pressures $P_{THDOWN}$ for every lapse of a set time period $T_{DOWN}$, as expressed by the following formula:

$$P_{TH} = P_{TH} - P_{THDOWN}.$$

Step S2-1-12: After the establishment of the released state of the first clutch C1, the pressure reduction of Step S2-1-11 is continued till a speed ratio e (= $N_{C1}/N_E$) exceeds a constant $e_1$. When the speed ratio e exceeds the constant $e_1$, the pressure reduction of Step S1-11 is stopped. The constant $e_1$ is set to 0.75, for example, by considering the delay of the change in the clutch input side RPM $N_{C1}$ for the operation of the oil pressure for releasing the first clutch C1. Incidentally, the speed ratio e may be substituted by the clutch input side RPM $N_{C1}$.

Incidentally, the applied state of the first clutch C1 is to be detected by deciding whether or not the difference (as will be called the "rotational difference") $\Delta$ N between the engine RPM $N_E$ or the RPM at the input side of the first clutch C1 and the clutch input side RPM $N_{C1}$ or the RPM at the output side has changed. The rotational difference $\Delta$ N does not change no matter whether the first clutch C1 might be completely applied or released. This makes it difficult to discriminate the state, in which the first clutch C1 is completely applied, and the state in which the first clutch C1 is released.

By awaiting the excess of the speed ratio over the constant $e_1$, therefore, it is possible to reliably establish the state immediately before the application of the first clutch C1 is started.

Here will be described the sub-routine of the zero vehicle speed estimation at Step S2-1-1 of Fig. 16.

Fig. 19 is a flow chart of a zero vehicle speed estimating routine in the embodiment of the present invention.

Step S2-1-1-1: An RPM difference $\Delta N_{C1(i)}$ is calculated by subtracting a clutch input side RPM $N_{C1(i-1)}$ of a time period $\Delta$ t ago from the present clutch input side RPM $N_{C1(i)}$. In this case, the time period $\Delta$ t is set with the clock in the automatic transmission control system 41 (Fig. 2) so that the clutch input side RPM $N_{C1}$ is detected by every time periods $\Delta$ t.

Step S2-1-1-2: A deceleration A of the vehicle is calculated by dividing the RPM difference $\Delta N_{C1(i)}$ by the time period $\Delta$ t.

Step S2-1-1-3: The time period $T_o$ till the vehicle stop state is calculated by dividing the present clutch input side RPM $N_{C1(i)}$ by the deceleration A.

Here, the relations between the applied/released states of the first clutch C1 and the rotational difference $\Delta$ N will be described with reference to Figs. 20 to 22.

Fig. 20 is a diagram for explaining the state of a clutch in the embodiment of the present invention; Fig. 21 is a time chart when the first clutch in the embodiment of the present invention is in a drag region; and Fig. 22 is a time chart when the first clutch in the embodiment of the present invention is in a slip region. Incidentally, in Fig. 20, the abscissa indicates the C-1 oil pressure $P_{C1}$ of the hydraulic servo C-1, and the ordinate indicates the rotational difference $\Delta$ N and a torque $T_q$ to be transmitted through the clutch C.

In Fig. 20, letters $T_q$ designate the torque to be transmitted from the engine 10 (Fig. 2) to the speed change unit 16 through the first clutch C1, and letters $\Delta$ N designate the rotational difference.

As the C-1 oil pressure $P_{C1}$ is gradually raised in this case, the torque $T_q$ increases so that a load is accordingly applied to the torque converter 12 to increase the rotational difference $\Delta$ N.

Therefore, the rotational difference $\Delta$ N is determined by the calculation means in the aforementioned automatic transmission control system 41 so that the applied/released states of the first clutch C1, i.e., the torque transmission state can be acquired by the rotational difference $\Delta$ N.

When the application of the first clutch C1 is started from its completely released state by raising the C-1 oil pressure $P_{C1}$, the piston of the hydraulic servo C-1 reaches the position (as will be called the "stroke end position") in which no stroke is left. When the C-1 oil pressure $P_{C1}$ is further raised, the first clutch C1 comes into the completely applied state. Hence, the region from the completely released state of the first clutch C1 to the arrival of the piston at the stroke end position will be termed as the drag region (or inoperative region) whereas the region from the arrival of the piston at the stroke end position to the completely applied state of the first clutch C1 will be termed as the slip region (or operative position).

In the drag region, the individual friction elements of the first clutch C1 are not in contact with each other. However, the torque $T_q$ is transmitted more or less through the first clutch C1 by the viscosity characteristics of the oil existing between the individual friction elements. Moreover, the torque $T_q$ gradually increases, as the stroke of the piston increases whereas the clearances (or gaps) between the friction elements decrease. In the drag region, too, the rotational difference $\Delta$ N arises according to the transmission of the torque $T_q$ and gradually increases as the torque $T_q$ increases.

In the slip region, on the other hand, the individual friction elements are in contact with each other so that a frictional force comes out to increase the torque abruptly. Moreover, the piston has already reached the stroke end position so that the oil in the hydraulic servo C-1 quits its flow to raise the C-1 oil pressure abruptly. As a result, the frictional force is accordingly increased to increase the torque $T_q$ more. As a result of the abrupt increase in the torque $T_q$, moreover, the rotational difference $\Delta$ N abruptly increases.

Here will be described the relation between the amount (as will be called the "variation") $\delta$ of the rotational difference $\Delta$ N according to the change in the applied/released states of the first clutch C1 and the amount (as will be called the "rate of change") ρ of the rotational difference Δ N for the unit time period. If the rotational difference Δ N at the start of a sampling time $T_{SAM}$ is assumed to be a reference rotational difference $\Delta N_m$, the variation δ can be expressed by the difference between the rotational difference Δ N and the reference rotational difference $\Delta N_m$ at an arbitrary time.

If the C-1 oil pressure $P_{C1}$ to be fed to the hydraulic servo C-1 is to be raised, the rotational difference Δ N changes gradually in the drag region but abruptly in the slip region, as described above. As a result, the variation δ in the rotational difference Δ N is small in the drag region but large in the slip region. Moreover, the rate of change ρ of the rotational difference Δ N is also low in the drag region but high in the slip region.

Noting that the rate of change ρ is different in the drag region and in the slip region, standard rates of change $\rho_1$ and $\rho_2$ in the drag region and in the slip region when the C-1 oil pressure $P_{C1}$ is raised are determined to suitably select an intermediate value between the two rates of change $\rho_1$ and $\rho_2$, and this intermediate value is set as a reference rate of change $\rho_{REF}$.

If this reference rate of change $\rho_{REF}$ is thus set, the rate of change ρ while the first clutch C1 is in the drag region is always smaller than the reference rate of change $\rho_{REF}$ whereas the rate of change while the first clutch C1 is in the slip region is always larger than the reference rate of change $\rho_{REF}$.

By comparing the rate of change ρ and the reference rate of change $\rho_{REF}$, therefore, it can be easily decided whether the first clutch C1 is in the drag region or in the slip region. Specifically, it can be decided, if the rate of change ρ is lower than the reference value $\rho_{REF}$, that the first clutch C1 is in the drag region and, if the rate of change ρ is higher than the reference value $\rho_{REF}$, that the first clutch C1 is in the slip region.

On the basis of this decision, moreover, it is possible to hold the state immediately before the first clutch C1 is transferred from the drag region to the slip region.

When the in-neutral control is started, the C-1 oil pressure $P_{C1}$ is lowered till at least the not-shown piston of the hydraulic servo C-1 starts its retraction, so that the first clutch C1 is transferred from the slip region to the drag region.

Subsequently, the C-1 oil pressure $P_{C1}$ is so controlled that the rate of change ρ of the rotational difference Δ N may not exceed the reference rate of change $\rho_{REF}$. Here in the present embodiment, when the rate of change ρ and the reference rate of change $\rho_{REF}$ are to be compared, the comparison is not made directly between them but between the variation δ of the rotational difference Δ N for a set time period and the threshold value corresponding to the reference rate of change $\rho_{REF}$.

As shown in Figs. 21 and 22, moreover, the aforementioned set time periods are exemplified by not only the sampling time $T_{SAM}$ but also the time periods $T_{S1}$ and $T_{S2}$ which are obtained by dividing the sampling time $T_{SAM}$ into three. If, in this case, the timings for the time periods $T_{S1}$ and $T_{S2}$ and the sampling time $T_{SAM}$ to elapse after the start of application of the first clutch C1 are designated by t1 to t3, respectively, the individual threshold values $\Delta N_{R1}$ (i = A, B and C) of the timings t1 to t3 are expressed, as follows:

$$\Delta_{RA} = \rho_{REF} \cdot T_{S1};$$

$$\Delta_{RB} = \rho_{REF} \cdot T_{S2};$$

and

$$\Delta_{RC} = \rho_{REF} \cdot T_{SM}.$$

Since the rate of change ρ is low in the drag region, the threshold value $\Delta N_{R1}$ is not exceeded at the individual timings t1 to t3, as seen from Fig. 21, even if the variation δ of the rotational difference Δ N increases as the time elapses. Therefore, the booster means 107 (Fig. 1) raises the C-1 oil pressure $P_{C1}$ by set pressures $\Delta P_{UP}$, as the sampling time $T_{SAM}$ elapses, to transfer the applied/released states of the first clutch C1 to the slip region side. Thus, the piston of the hydraulic servo C-1 is brought closer to the stroke end position each time the sampling time $T_{SAM}$ elapses.

When the piston reaches the stroke end position so that the first clutch C1 transfers to the slip region, the rate of change ρ of the rotational difference Δ N exceeds the reference rate of change $\rho_{REF}$.

As shown in Fig. 22, for example, after the start of the application of the first clutch C1, the variation δ of the rotational difference Δ N exceeds a threshold value $N_{RA}$ at a timing t4 before lapse of the time period $T_{S1}$. Therefore, the first pressure reducing means 108 decides that the first clutch C1 has transferred from the drag region to the slip region at the timing t4 (i.e., at the instant when it is decided by the control program of the automatic transmission control system 41 that the variation δ has exceeded the threshold value $N_{RA}$), and lowers the C-1 oil pressure $P_{C1}$ by set pressures $\Delta P_{DOWN}$. At this timing t4, the sampling time $T_{SAM}$ is reset. If, in this case, the timings after lapses of the time period $T_{S1}$ and $T_{S2}$ and the sampling time $T_{SAM}$ from the timing t4 are respectively designated by t5 to t7, the threshold value $\Delta N_{R1}$ is set at each of the timings t5 to t7.

Thus, in the in-neutral control, the C-1 oil pressure $P_{C1}$ is lowered when the first clutch C1 transfers from the drag region to the slip region, the first clutch C1 is always held in the specific release state, i.e., in the state immediately before it transfers from the drag region to the slip region.

Since the individual friction elements of the first clutch C1 are thus hardly brought into contact with each other, the torque to be transmitted from the engine 10 to the speed change unit 16 is extremely reduced, thereby not only to improve the fuel economy but also to eliminate any idle vibration in the vehicle.

Moreover, the individual friction elements of the first clutch C1 are freed from being heated to deteriorate their durability.

Moreover, since the piston of the hydraulic servo C-1 is held immediately ahead of the stroke end position, the loss stroke of the piston can be reduced. This makes it possible to prevent any delay in the application, as might otherwise be caused by the loss stroke, thereby to prevent the racing and application shock of the engine 10.

In the aforementioned drag region, the variation δ of the rotational difference Δ N does not exceed the threshold value $\Delta N_{R1}$ so that the booster means 107 raises the C-1 oil pressure $P_{C1}$ by the set pressure $\Delta P_{UP}$ each time of lapse of the sampling time $T_{SAM}$, to transfer the applied/released states of the first clutch C1 to the side of the slip region. However, the rise of the actual C-1 oil pressure $P_{C1}$ in the hydraulic servo C-1 is delayed by the viscous resistance or the like of the oil when the C-1 oil pressure $P_{C1}$ is raised by the set pressure $\Delta P_{UP}$.

In the previous decision, it may be apparently decided that the variation δ does not exceed the threshold value $\Delta N_{R1}$, if a delay is left in the rise of the C-1 oil pressure $P_{C1}$ at the instant of lapse of the sampling time $T_{SAM}$ after the C-1 oil pressure $P_{C1}$ has been raised by the set pressure $\Delta P_{UP}$. Since, in this case, the C-1 oil pressure $P_{C1}$ is raised more prematurely than necessary by the set pressure $\Delta P_{UP}$, the delays in the rise of the C-1 oil pressure $P_{C1}$ are accumulated to cause the overshoot at the transfer from the drag region to the slip region.

Moreover, if the sampling time $T_{SAM}$ is longer than necessary, the piston is accordingly retracted.

Therefore, this sampling time $T_{SAM}$ is so set to correspond to the necessary time period for the end of the actual change in the C-1 oil pressure $P_{C1}$ when the C-1 oil pressure $P_{C1}$ is raised by the set pressure $\Delta P_{UP}$, that the C-1 oil pressure $P_{C1}$ may be raised at proper time instants.

Thus, the C-1 oil pressure $P_{C1}$ in the hydraulic servo C-1 is raised by the set pressure $\Delta P_{UP}$ after the delay in its rise has disappeared. As a result, no accumulation of delays can be caused to prevent the overshoot at the time when the first clutch C1 transfers from the drag region to the slip region.

Moreover, the piston of the hydraulic servo C-1 can be prevented from retracting more than necessary.

Next, the in-neutral control sub-routine of Step S2 of Fig. 14 will be described with reference to Figs. 23 and 24.

Fig. 23 is a first flow chart of an in-neutral control routine in the embodiment of the present invention, and Fig. 24 is a second flow chart of an in-neutral control routine in the embodiment of the present invention.

Step S2-2-1: The initial values of an oil pressure control flag F, a counted value C of a not-shown counter and the reference rotational difference $\Delta N_m$ are set, as follows:

$$F \leftarrow OFF;$$

$$C \leftarrow 0;$$

and

$\Delta N_m \leftarrow$ the value of the rotational difference Δ N ($= N_E - N_{C1}$) at this time.

Steps S2-2-2 and S2-2-3: The C-1 oil pressure $P_{C1}$ is held at the final value in the first clutch releasing control routine. If the decision of whether or not the rotational difference Δ N has changed is started immediately after it has been confirmed that the first clutch C1 is released to the predetermined state, an erroneous decision may be made by the change in the rotational difference Δ N, as caused by the pressure reduction in the first clutch release control routine. Therefore, the timing is performed by the not-shown second timer to await the elapse of a time period $T_3$, for which the C-1 oil pressure $P_{C1}$ is held. As a result, the decision on whether or not the rotational difference Δ N has changed is delayed so that the C-1 oil pressure $P_{C1}$ can be prevented from being controlled in an unstable state immediately after the first clutch C1 has been released. The routine advances to Step S2-2-4 if the time period $T_3$ elapses.

Step S2-2-4: The rotational difference Δ N between the engine RPM $N_E$ and the clutch input side RPM $N_{C1}$ is calculated.

Step S2-2-5: It is decided whether or not the predetermined time $T_{SAM}$ such as 1.0 [secs] or 0.5 [secs] has elapsed. The routine advances to Step S2-2-6, if the sampling time $T_{SAM}$ has elapsed, but to Step S2-2-11 if the sampling time $T_{SAM}$ has not elapsed.

Step S2-2-6: It is decided whether or not the difference between the rotational difference Δ N and the reference rotational difference $\Delta N_m$, i.e., the absolute value of the variation δ is below a threshold value $\Delta N_{RC}$. The routine advances to Step S2-2-7, if the absolute value of the variation δ is below the threshold value $\Delta N_{RC}$, but to Step S2-2-9 if the absolute value of the variation δ is over the threshold value $\Delta N_{RC}$.

Step S2-2-7: It is decided whether or not the counted value C of the counter is below a set value $C_R$.

The routine advances to Step S2-2-8, if below the set value $C_R$, but to Step S2-2-16 if over the set value $C_R$.

Step S2-2-8: Since the absolute value of the variation $\delta$ is below the threshold value $\Delta N_{RC}$ even after the sampling time $T_{SAM}$ has elapsed, the first clutch C1 is in the drag region. Hence, the booster means in the automatic transmission control system 41 boosts the C-1 oil pressure $P_{C1}$ by the set pressure $\Delta P_{UP}$ at the instant when the sampling time $T_{SAM}$ elapses:

$$P_{C1} \leftarrow P_{C1} + \Delta P_{UP}.$$

Moreover, the rotational difference $\Delta N$ is set to the reference rotational difference $\Delta N_m$, and the oil pressure control flag F is turned ON :

$$\Delta N_m \leftarrow \Delta N;$$

and

$$F \leftarrow ON.$$

Step S2-2-9: It can be decided that the first clutch C1 is transferring from the drag region to the slip region. Second pressure reducing means in the automatic transmission control system 41 lowers the C1 oil pressure $P_{C1}$ by the set pressure $\Delta P_{DOWN}$ at the instant when the sampling time $T_{SAM}$ elapses:

$$P_{C1} \leftarrow P_{C1} - \Delta P_{DOWN}.$$

Moreover, the rotational difference $\Delta N$ is set to the reference rotational difference $\Delta N_m$, and the oil pressure control flag F is turned OFF. At the same time, the value "1" is subtracted from the counted value C of the counter:

$$\Delta N_m \leftarrow \Delta N ;$$

$$F \leftarrow OFF;$$

and

$$C \leftarrow C - 1 \ (C = 0 \text{ for } C < 0).$$

If it is decided at Step S1-12 of the first clutch release routine that the speed ratio e exceeds the constant $e_1$, it is confirmed that the first clutch C1 is released to some extent. As a result, the first clutch release routine is ended, but the first clutch C1 is not so released that the piston of the hydraulic servo C-1 will start its retraction. This makes it necessary to lower the C-1 oil pressure $P_{C1}$ so much that the first clutch C1 may transfer from the slip region to the drag region. Thus, the operation of Step S2-2-9 is repeated till the first clutch C1 transfers from the slip region to the drag region.

Once the first clutch C1 transfers from the slip region to the drag region, it is held in the state immediately before the transfer from the drag region to the slip region, so that the operation of Step S2-2-9 is not executed.

When the variation $\delta$ increases over the threshold value $\Delta N_{RC}$, the first clutch C1 can be released so long as the piston of the hydraulic servo C-1 starts its retraction without fail, by repeating the operation of lowering the C-1 oil pressure $P_{C1}$ by the set pressure $\Delta P_{DOWN}$.

Step S2-2-10: The C-1 oil pressure $P_{C1}$ before the pressure reduction at Step S2-2-9 is set as a reference C-1 oil pressure $P_{C1m}$ and is stored in a not-shown storage device:

$$P_{C1m} \leftarrow P_{C1} \text{ before the pressure reduction.}$$

Step S2-2-11: The threshold value $\Delta N_{R1}$ is updated.

Step S2-2-12: It is decided whether or not the oil pressure control flag F is ON, that is, whether or not the C-1 oil pressure $P_{C1}$ is raised at the instant of elapse of the previous sampling time $T_{SAM}$. The routine advances to Step S2-2-13, if the oil pressure control flag F is ON, but to Step S2-2-16 if the oil pressure control flag F is OFF.

Step S2-2-13: Since the C-1 oil pressure $P_{C1}$ is raised by the set pressure $\Delta P_{UP}$ (because the oil pressure control flag F is ON) at the instant of lapse of the previous sampling time $T_{SAM}$, it is decided whether or not the variation $\delta$ or the remainder of the rotational difference $\Delta N$ from the reference rotational difference $\Delta N_m$ is below the threshold value $\Delta N_{R1}$. The routine advances to Step S2-2-14, if the variation $\delta$ is below the threshold value $\Delta N_{R1}$, but to Step S2-2-16 if the variation $\delta$ is over the threshold value $\Delta N_{R1}$.

Step S2-2-14: As a result, that the C-1 oil pressure $P_{C1}$ is raised by the set pressure $\Delta P_{UP}$ at the instant of elapse of the previous sampling time $T_{SAM}$, the rotational difference $\Delta N$ has highly changed. Therefore, the first pressure reducing means in the automatic transmission control system 41 decides that the first clutch C1 has transferred from the drag region to the slip region, and lowers the C-1 oil pressure $P_{C1}$ by the set pressure $\Delta P_{DOWN}$ at the instant of Step S2-2-16:

$$P_{C1} \leftarrow P_{C1} - \Delta P_{DOWN}.$$

Moreover, the sampling time $T_{SAM}$ is reset, and the oil pressure control flag F is turned OFF. At the same time, the value "1" is added to the counted value C of the counter:

$$\Delta N_m \leftarrow \Delta N;$$

$$F \leftarrow OFF;$$

and

$$C \leftarrow C + 1.$$

If, in this time, the C-1 oil pressure $P_{C1}$ is lowered by the set pressure $\Delta P_{DOWN}$, the first clutch C1 takes the state immediately before the transfer form the drag region to the slip region. It is, therefore, desired that the C-1 oil pressure $P_{C1}$ is raised again by the set pressure $\Delta P_{UP}$ at the instant when the varied C-1 oil pressure $P_{C1}$ is stabilized by lowering it by the set pressure $\Delta P_{DOWN}$. Therefore, it is detected that the C-1 oil pressure $P_{C1}$ has been lowered by the set pressure $\Delta P_{DOWN}$. At the instant of this detection, the sampling time $T_{SAM}$ is reset to start again the timing.

Thus, the C-1 oil pressure $P_{C1}$ can be raised early by the set pressure $\Delta P_{UP}$ after it has been lowered by the set pressure $\Delta P_{DOWN}$, so that the first clutch C1 can be always held in the state immediately before the transfer from the drag region to the slip region.

Incidentally, if the reduction of the C-1 oil pressure $P_{C1}$ is detected when the variation $\delta$ exceeds the threshold value $\Delta N_{RC}$ after the sampling time $T_{SAM}$ has been reset, the operation of Step S2-2-9 is executed so that the C-1 oil pressure $P_{C1}$ is lowered by the second pressure reducing means.

When the C-1 oil pressure $P_{C1}$ is lowered by the set pressure $\Delta P_{DOWN}$, the reference rotational difference $\Delta N_m$ is not set. Hence, the variation $\delta$ is the difference between the rotational difference $\Delta N$ and the reference rotational difference $\Delta N_m$ preceding by one, so that it basically takes substantial zero. Hence, the C-1 oil pressure $P_{C1}$ can be raised by the set pressure $\Delta P_{UP}$ after it has been lowered by the set pressure $\Delta P_{DOWN}$. As a result, the operation of Step S2-2-9 is hardly executed.

Step S2-2-15: The C-1 oil pressure $P_{C1}$ before lowered at Step S2-2-14 is set as the reference C-1 oil pressure $P_{C1m}$ and is stored in the storage device:

$$P_{C1m} \leftarrow P_{C1} \text{ before lowered.}$$

Step S2-2-16: It is decided whether or not the condition for ending the in-neutral control of the first clutch C1 is satisfied. The in-neutral control routine is ended, if the ending condition is satisfied, but is returned to Step S2-2-4 to repeat the aforementioned operation, if the ending condition is not satisfied.

Next, the sub-routine for updating the threshold value at Step S2-2-11 of Fig. 23 will be described with reference to Fig. 25.

Fig. 25 is a flow chart of a threshold value updating routine in the embodiment of the present invention.

In the present embodiment: a threshold value $\Delta N_{RA}$ is set to 15 [rpm]; a threshold value $\Delta N_{RB}$ is set to 20 [rpm]; and a threshold value $\Delta N_{RC}$ is set to 30 [rpm].

Step S2-2-11-1: It is decided whether or not a time period (as will be called the "elapsed time") $T_{sam}$, as elapsed from the start of timing of the sampling time $T_{SAM}$, is shorter than the time $T_{S1}$. The routine advances to Step S2-2-11-2, if the elapsed time $T_{sam}$ is shorter than the time $T_{S1}$, but to Step S2-2-11-3 if the lapse time $T_{sam}$ is longer than the time $T_{S1}$.

Step S2-2-11-2: The value $\Delta N_{RA}$ is set as the threshold value $\Delta N_{R1}$.

Step S2-2-11-3: It is decided whether or not the elapsed time $T_{sam}$ is shorter than the time $T_{S2}$. The routine advances to Step S2-2-11-4, if the elapsed time $T_{sam}$ is shorter than the time $T_{S2}$, but to Step S2-2-11-5 if the elapsed time $T_{sam}$ is longer than the time $T_{S2}$.

Step S2-2-11-4: The value $\Delta N_{RB}$ is set as the threshold value $\Delta N_{R1}$.

Step S2-2-11-5: The value $\Delta N_{RC}$ is set as the threshold value $\Delta N_{R1}$.

Next, the first clutch application control subroutine at Step S2-3 of Fig. 14 will be described with reference to Figs. 26 to 28.

Fig. 26 is a first flow chart of a first clutch application control routine in the embodiment of the present invention; Fig. 27 is a flow chart of a first clutch application control routine in the embodiment of the present invention; and Fig. 28 is a diagram of a relation between a throttle opening and a set value in the embodiment of the present invention. Incidentally, the abscissa of Fig. 28 indicates the throttle opening $\theta$, and the ordinate indicates the set value.

Step S2-3-1: The clutch input side RPM $N_{C1}$ at the instant when the ending condition of the in-neutral control is satisfied is stored as a value $N_{(1)}$ in the not-shown storage device of the automatic transmission control system 41 (Fig. 2). Simultaneously with this, the timing of the fourth timer is started.

Step S2-3-2: A constant $P_{C1s}$ is added as a shelf pressure to the reference C-1 oil pressure $P_{C1m}$ as the base pressure which is set at Steps S2-2-10 and S2-2-15, and this summation is set as the C-1 oil pressure $P_{C1}$. Incidentally, the additional pressure $P_{C1S}$ is to set to such a value as to move the not-shown piston of the hydraulic servo C-1 (Fig. 5) without fail and to reduce the application shock to be caused by the application of the first clutch C1.

When the driver performs the starting operation so that the transfer of the vehicle from the stop state to the start state is detected, the additional pressure $P_{C1S}$ is added to the reference C-1 oil pressure $P_{C1m}$ so that the oil pressure C-1 oil pressure $P_{C1}$ is raised to bring the first clutch C1 into a partially applied state. Subsequently, the C-1 oil pressure $P_{C1}$ is further raised to bring the first clutch C1 into the completely applied state.

Step S2-3-3: It is awaited that the clutch input side RPM $N_{C1}$ becomes smaller than the remainder of the value $N_{(1)}$ from a constant DSN. If the clutch input side RPM $N_{C1}$ becomes smaller than the remainder of the value $N_{(1)}$ from the constant DSN, the routine decides the start of application of the first clutch C1 and advances to Step S2-3-4.

Step S2-3-4: It is decided whether or not the gear stage is at the 1st speed. The routine advances to Step S2-3-6, if at the 1st speed, but to Step S2-3-5 if not at the 1st speed.

Step S2-3-5: The 1st speed shift output is generated.

Step S2-3-6: The throttle pressure $P_{TH}$ from the linear solenoid valve 66 (Fig. 4) is changed, and the C-1 oil pressure $P_{C1}$ is swept up. After this, the C-1 oil pressure $P_{C1}$ is raised by a set pressure $\Delta P_B$ at each lapse of a time $\Delta t_B$ to continue the application of the first clutch C1.

Step S2-3-7: It is decided whether or not a time $T_4$, as timed by the fourth timer, has elapsed. The routine advances to Step S2-3-10, if the time $T_4$ elapses, but to Step S2-3-8 if the time $T_4$ does not elapse.

Step S2-3-8: It is decided whether or not the clutch input side RPM $N_{C1}$ is below a constant DEN. The routine advances to Step S2-3-9, if the clutch input side RPM $N_{C1}$ is over the constant DEN, but returns to Step S2-3-3 if the clutch input side RPM $N_{C1}$ is below the constant DEN. Incidentally, if it is decided that the clutch input side RPM $N_{C1}$ is below the constant DEN, the fifth timer starts the timing.

Step S2-3-9: It is decided whether or not a time $T_5$, as timed by the fifth timer, has elapsed. The routine advances to Step S2-3-10, if the time $T_5$ elapses, but returns to Step S2-3-3 if the time $T_5$ does not elapse.

In this case, the set values such as the additional pressure $P_{C1S}$. the pressure $P_B$ or the set pressure $\Delta P_B$ are set, as shown in Fig. 28, on the basis of a variable such as the throttle opening θ, as corresponding to the input torque $T_T$.

Step S2-3-10: The third solenoid signal $S_3$ is turned OFF.

Incidentally, the present invention should not be limited to the foregoing embodiment but can be modified in various manners on the basis of its gist, and these modifications should not be excluded from the scope of the present invention.

According to the present invention, as described above, a control system for an automatic transmission comprises: a clutch adapted to be applied when a forward running range is selected, to transmit the rotation of an engine to the transmission mechanism of a speed change unit; hydraulic servo for applying/releasing the clutch; and a control unit for controlling the oil pressure to be fed to the hydraulic servo.

Moreover, the control unit includes: application starting pressure detecting means for detecting the application starting pressure at the instant when the application of the clutch is started; initial application pressure setting means for setting an initial application pressure on the basis of the application starting pressure which is detected by the application starting pressure detecting means; and oil pressure adjusting means for adjusting the oil pressure to be fed to the hydraulic servo, when a change is made to the forward running range, and then raising the same gradually.

In this case, the application starting pressure, as detected by the application starting pressure detecting means, takes the value at which the application of the clutch is actually started, so that the initial application pressure can be properly set even if the actual oil pressure to be fed to the hydraulic servo is varied by the dispersion in the urging force of the return spring for pushing the piston of the hydraulic servo or the dispersion in the hydraulic control system.

As a result, the clutch can always be stably applied to eliminate not only the delay in the engagement of the clutch but also an abrupt start of engagement thereby to prevent the occurrence of the application shock.

Another control system for an automatic transmission according to the present invention further comprises: a fluid transmission unit arranged between the engine and the clutch; input RPM detecting means for detecting the input RPM of the fluid transmission unit; output RPM detecting means for detecting the output RPM of the fluid transmission unit; and stop state detecting means for detecting a vehicle stop state in which the forward running range is selected, in which the throttle opening is fully closed, in which the brake pedal is depressed and in which the vehicle speed is substantially zero.

Moreover, the control unit includes: calculation means for calculating the rotational difference between the input RPM and the output RPM; release means for releasing the clutch by lowering the oil pressure to be fed to the hydraulic servo till the retraction of the piston of the hydraulic servo is started, if the vehicle stop state is detected; and specific release state holding means for holding the state immediately before the transfer of the clutch from a drag region to a slip region, till the vehicle stop state is not detected after the release of the clutch.

Moreover, the specific release state holding means includes: booster means for raising the oil pressure to be fed to the hydraulic servo, by a set pressure unless the rate of change of the rotational difference exceeds a reference rate of change even after lapse of a set time; and first pressure reducing means for lowering the oil pressure to be fed to the hydraulic servo, by a set pressure if the rate of change exceeds the reference rate irrespective of the lapse of the set time and if the rotational difference increases.

Furthermore, the application starting pressure detecting means detects, when the oil pressure to be fed to the hydraulic servo is raised by a set pressure by the booster means and then lowered by a set pressure by the first pressure reducing means, the oil pressure before lowered, as the application starting pressure.

If, in this case, it is decided by the stop state detecting means that a forward running range is selected, that the throttle opening is fully closed. that the brake pedal is depressed and that the vehicle speed is substantially zero, the neutral control is started.

Then, the release means releases the clutch by lowering the oil pressure to be fed to the hydraulic servo, till the retraction of the piston of the hydraulic servo is started.

Moreover, the specific release state holding means includes: booster means for raising the oil pressure to be fed to the hydraulic servo, by a set pressure unless the rate of change of the rotational difference exceeds a reference rate of change even after lapse of a set time; and first pressure reducing means for lowering the oil pressure to be fed to the hydraulic servo, by a set pressure if the rate of change exceeds the reference rate irrespective of the lapse of the set time and if the rotational difference increases.

The booster means decides that the clutch is in the drag region, if the rate of change of the rotational difference does not exceed the reference rate of change, and raises the oil pressure to be fed to the hydraulic servo, by the set pressure. On the other hand, the first pressure reducing means decides that the clutch is in the slip region, if the rate of change exceeds the reference rate of change irrespective of the lapse of the set time and if the rotational difference increases, and lowers the oil pressure to be fed to the hydraulic servo, by the set pressure.

Thus, the oil pressure to be fed to the hydraulic servo is lowered at the instant of the transfer of the clutch from the drag region to the slip region, so that it is always held in the state immediately before the transfer from the drag region to the slip region.

As a result, when the vehicle is in the stop state, the neutral control can be effected by setting the clutch in the state immediately before applied, so that the load to be applied to the engine can be lightened to reduce the fuel consumption of the engine thereby to improve the fuel economy.

Furthermore, the application starting pressure detecting means detects, when the oil pressure to be fed to the hydraulic servo is raised by a set pressure by the booster means and then lowered by a set pressure by the first pressure reducing means, the oil pressure before lowered, as the application starting pressure.

In this case, the application starting pressure, as detected by the application starting pressure detecting means, takes the value at which the application of the clutch is actually started, because it is the oil pressure before it is lowered by the set pressure by the first pressure reducing means. As a result, the initial application pressure can be properly set even if the actual oil pressure to be fed to the hydraulic servo is varied by the dispersion in the urging force of the return spring for pushing the piston of the hydraulic servo or the dispersion in the hydraulic control system.

Furthermore, the result of the neutral control can be utilized as the application starting pressure so that the application starting pressure detecting means for the N-D change control need not be especially arranged. This makes it possible to simplify the control unit.

As a result, the clutch can always be stably applied with neither a delay nor an abrupt start so that the application shock can be prevented.

In still another control system for an automatic transmission according to the present invention, furthermore, the reference rate of change is set at a value between a standard rate of change when the clutch is in the drag region and a standard rate of change when the clutch is in the slip region.

In this case, it is possible to easily decide whether the clutch is in the drag region or in the slip region.

In still another control system for an automatic transmission of the present invention, still moreover, the set time is set to correspond to a time, when the oil pressure to be fed to the hydraulic servo is changed, till the actual change of the oil pressure ends.

Since, in this case, the oil pressure is raised after the delay in the rise of the oil pressure in the hydraulic servo has been eliminated, the delay is not accumulated so that the overshoot can be prevented at the time of the transfer of the clutch from the drag region to the slip region.

It is further possible to prevent the piston of the hydraulic servo from retracting more than necessary.

In a further control system for an automatic transmission of the present invention, furthermore, the release means includes second pressure reducing means for reducing the oil pressure to be fed to the hydraulic servo if the rate of change exceeds the reference rate of change and if the rotational difference decreases.

In this case, the clutch can be released till the piston of the hydraulic servo starts its retraction without fail.

A further control system for an automatic transmission according to the present invention further comprises torque detecting means for detecting the output torque from the engine.

Moreover, the initial application pressure setting means applies an additional pressure, as set to be the higher for the higher output torque, to the application starting pressure.

In this case, the additional pressure is applied to the application starting pressure and is set to the higher level for the higher output torque. As a result, a stable engagement state can be established without being influenced by the output torque, to prevent an engagement delay and an abrupt engagement.

A further control system for an automatic transmission according to the present invention further comprises oil temperature detecting means for detecting the oil temperature.

Furthermore, the initial application pressure setting means applies the additional pressure, as set to be the lower for the higher oil temperature, to the application starting pressure.

In this case, the additional pressure is applied to the application starting pressure and can be set to the lower level for the higher oil temperature. As a result, a stable application state can be established without being influenced by the oil temperature, to prevent the engagement delay and the abrupt engagement.

A further control system for an automatic transmission according to the present invention further comprises application detecting means for detecting the start of application of the clutch.

In a further control system for an automatic transmission according to the present invention, the oil pressure adjusting means sets the oil pressure to be fed to the hydraulic servo, to the initial application pressure till the start of application is detected by the application detecting means, and raises the same gradually from the initial application pressure.

As a result, the clutch is not abruptly applied so that the application shock can be prevented.

## Claims

**1.** A control system for an automatic transmission, comprising: a clutch (C1) adapted to be applied when a forward running range is selected, to transmit the rotation of an engine (10) to the transmission mechanism of a speed change unit; hydraulic servo (C-1) for applying/releasing said clutch (C1); and a control unit (41) or controlling the oil pressure to be fed to said hydraulic servo,

wherein said control unit (41) includes: application starting pressure detecting means (101) for detecting the application starting pressure at the instant when the application of said clutch is started; initial application pressure setting means (104) for setting an initial application pressure on the basis of the application starting pressure which is detected by said application starting pressure detecting means; and oil pressure adjusting means (103) for adjusting the oil pressure to be fed to said hydraulic servo (C-1), when a change is made to said forward running range, and then raising the same gradually,

**characterized by**

a fluid transmission unit arranged between said engine and said clutch; input RPM detecting means (49) for detecting the input RPM of said fluid transmission unit; output RPM detecting means (47) for detecting the output RPM of said fluid transmission unit; and stop state detecting means for detecting a vehicle stop state in which said forward running range is selected, in which the throttle opening is fully closed, in which the brake pedal is depressed and in which the vehicle speed is substantially zero,

wherein said control unit (41) includes: calculation means for calculating the rotational difference between said input RPM and said output RPM; release means for releasing said clutch (C1) by lowering the oil pressure to be fed to said hydraulic servo (C-1) till the retraction of the piston of said hydraulic servo is started, if said vehicle stop state is detected; and specific release state holding means for holding the state immediately before the transfer of said clutch from a drag region to a slip region, till said vehicle stop state is not detected after the release of said clutch; and that said specific release state holding means includes: booster means for raising the oil pressure to be fed to said hydraulic servo, by a set pressure unless the rate of change of said rotational difference exceeds a reference rate of change even after lapse of a set time; and first pressure reducing means for lowering the oil pressure to be fed to said hydraulic servo, by a set pressure if said rate of change exceeds the reference rate irrespective of the lapse of said set time and if the rotational difference increases; and in that said application starting pressure detecting means (101) detects, when the oil pressure to be fed to said hydraulic servo is raised by a set pressure by said booster means and then lowered by a set pressure by said first pressure reducing means, the oil pressure before lowered, as said application starting pressure.

**2.** A control system for an automatic transmission according to claim 1,

wherein said reference rate of change is set at a value between a standard rate of change when said clutch is in the drag region and a standard rate of change when said clutch is in the slip region.

**3.** A control system for an automatic transmission according to claim 1 or 2,

wherein said set time is set to correspond to a time, when the oil pressure to be fed to the hydraulic servo is changed, till the actual rate of change of the oil pressure ends.

**4.** A control system for an automatic transmission according to claim 1, 2, or 3,

wherein said release means includes second pressure reducing means for reducing the oil pressure to be fed to said hydraulic servo if said rate of change exceeds the reference rate of change and if said rotational difference decreases.

**5.** A system according to any of claims 1 to 4, further comprising torque detecting means (49) for detecting the output torque from said engine.

wherein said initial application pressure setting means (104) applies an additional pressure, as set to be the higher for the higher output torque, to said application starting pressure.

**6.** A system according to any of claims 1 to 5, further comprising oil temperature detecting means (46) for detecting an oil temperature,

wherein said initial application pressure setting means (104) applies an additional pressure, as set to be the lower for the higher oil temperature, to said application starting pressure.

**7.** A system according to any of claims 1 to 6, further comprising application detecting means for detecting the start of application of said clutch,

wherein said oil pressure adjusting means (103) sets the oil pressure to be fed to said hydraulic servo, to said initial application pressure till the start of application is detected by said application detecting means, and raises the same gradually from the initial application pressure.

**Patentansprüche**

**1.** Steuerung für ein automatisches Getriebe mit: einer Kupplung (C1), die angepaßt ist, eingerückt zu werden, wenn ein Vorwärtsfahrbereich gewählt wird, um die Rotation eines Motors (10) auf den Getriebemechanismus einer Drehzahländerungseinheit zu übertragen; einem Hydraulikservo (C-1) für das Einrücken/Ausrücken der Kupplung (C1); und einer Steuereinheit (41) zum Steuern des dem Hydraulikservo zuzuführenden Öldrucks,

wobei, die Steuereinheit (41) aufweist: eine Einrückstartdruck-Detektionseinrichtung (101) zum Detektieren des Einrückstartdrucks in dem Moment, wenn die Einrückung der Kupplung gestartet wird; eine Anfangseinrückdruck-Einstelleinrichtung (104) zum Einstellen eines Anfangseinrückdrucks auf der Basis des Einrückstartdrucks, welcher von der Einrückstartdruck-Detektionseinrichtung detektiert wird; und eine Öldruck-Anpassungseinrichtung (103), um den dem Hydraulikservo (C-1) zuzuführenden Öldruck anzupassen, wenn eine Veränderung zu einem Vorwärtsfahrbereich durchgeführt wird, und um dann denselben schrittweise zu erhöhen,

**gekennzeichnet durch**:

eine zwischen dem Motor und der Kupplung angeordnete Fluidkraftübertragungseinheit; eine Eingangsdrehzahl-Detektionseinrichtung (49) zum Detektieren der Eingangsdrehzahl der Fluidkraftübertragungseinheit; eine Ausgangsdrehzahl-Detektionseinrichtung (47) zum Detektieren der Ausgangsdrehzahl der Fluidkraftübertragungseinheit; und eine Stopzustand-Detektionseinrichtung zum Detektieren eines Fahrzeugstop-Zustands, in welchem der Vorwärtsfahrbereich gewählt wird, in welchem die Drosselklappenöffnung vollständig geschlossen ist, in welchem das Bremspedal niedergedrückt ist, und in welchem die Fahrzeuggeschwindigkeit im wesentlichen Null ist,

wobei die Steuereinheit (41) aufweist: eine Berechnungseinheit zum Berechnen der Rotationsdifferenz zwischen der Eingangsdrehzahl und der Ausgangsdrehzahl; eine Ausrückeinrichtung zum Ausrücken der Kupplung (C1) **durch** Absenken des dem Hydraulikservo (C-1) zuzuführenden Öldrucks bis die Zurückziehung des Kolbens des Hydraulikservos gestartet wird, wenn der Fahrzeugstop-Zustand detektiert wird; und eine Halteeinrichtung für einen speziellen Ausrückzustand zum Beibehalten des Zustands unmittelbar vor dem Übergang der Kupplung von einem Schleppbereich in einen Schlupfbereich bis kein Fahrzeugstop-Zustand nach dem Ausrücken der Kupplung mehr detektiert wird; und die Halteeinrichtung für den speziellen Ausrückzustand aufweist: eine Verstärkereinrichtung zum Anheben des dem Hydraulikservo zuzuführenden Öldrucks um einen Solldruck, sofern nicht die Änderungsrate der Rotationsdifferenz eine Referenzänderungsrate sogar nach Verstreichen einer Sollzeit überschreitet; und eine erste Druckabsenkeinrichtung zum Absenken des dem Hydraulikservo zuzuführenden Öldrucks um einen Solldruck, wenn die Änderungsrate die Referenzrate unabhängig von dem Verstreichen der Sollzeit überschreitet und wenn die Rotationsdifferenz zunimmt; und die Einrückstartdruck-Detektionseinrichtung (101), wenn der dem Hydraulikservo zuzuführende Öldruck um einen Solldruck von der Verstärkungseinrichtung erhöht und dann von der ersten Druckabsenkeinrichtung um einen Solldruck abgesenkt wird, den Öldruck vor der Absenkung als den Einrückstartdruck detektiert.

**2.** Steuerung für ein automatisches Getriebe nach Anspruch 1,

wobei die Referenzänderungsrate auf einen Wert zwischen einer Standardveränderungsrate, wenn sich die Kupplung in dem Schleppbereich befindet, und einer Standardveränderungsrate, wenn sich die Kupplung in dem Schlupfbereich befindet, gesetzt ist.

**3.** Steuerung für ein automatisches Getriebe nach Anspruch 1 oder 2,

wobei die Sollzeit so gesetzt ist, daß sie, wenn der dem Hydraulikservo zuzuführende Öldruck verändert wird, einer Zeit entspricht, bis die tatsächliche Veränderungsrate des Öldrucks endet.

**4.** Steuerung für ein automatisches Getriebe nach Anspruch 1, 2 oder 3,

wobei die Ausrückeinrichtung ferner eine zweite Druckabsenkeinrichtung zum Absenken des dem Hydraulikservo zuzuführenden Öldrucks aufweist, wenn die Veränderungsrate die Referenzveränderungsrate überschreitet, und wenn die Rotationsdifferenz abnimmt.

**5.** Steuerung für ein automatisches Getriebe nach einem der Ansprüche 1 bis 4, welche ferner eine DrehmomentDetektionseinrichtung (49) zum Detektieren des Ausgangsdrehmoments des Motors aufweist,

wobei die Anfangseinrückdruck-Einstelleinrichtung (104) einen für das höhere Ausgangsdrehmoment angepaßten höheren zusätzlichen Druck zu dem Einrückstartdruck hinzufügt.

**6.** Steuerung für ein automatisches Getriebe nach einem der Ansprüche 1 bis 5, welche ferner eine ÖltemperaturDetektionseinrichtung (46) zum Detektieren einer Öltemperatur aufweist,

wobei Anfangseinrückdruck-Einstelleinrichtung (104) einen niedrigeren zusätzlichen Druck für eine höhere Öltemperatur dem Einrückstartdruck hinzufügt.

**7.** Steuerung für ein automatisches Getriebe nach einem der Ansprüche 1 bis 6, welche ferner eine Einrück-Detektionseinrichtung zum Detektieren des Starts der Einrükkung der Kupplung aufweist,

wobei die Öldruck-Anpassungseinrichtung (103) den dem Hydraulikservo zuzuführenden Öldruck auf den Anfangseinrückdruck einstellt, bis der Start der Einrückung von der Einrück-Detektionseinrichtung detektiert wird, und denselben schrittweise von dem Anfangseinrückdruck an steigert.

## Revendications

**1.** Système de commande pour transmission automatique, comprenant : un embrayage (C1) adapté pour être appliqué lorsqu'une gamme de marche avant est choisie, pour transmettre la rotation d'un moteur (10) au mécanisme de transmission d'un module de changement de vitesse; un servomécanisme hydraulique (C-1) pour appliquer/relâcher ledit embrayage (C1); et un module de commande (41) pour commander la pression d'huile à transmettre audit servomécanisme hydraulique,

dans lequel ledit module de commande (41) comporte : un moyen de détection (101) de pression de début d'application pour détecter la pression de début d'application à l'instant où commence l'application dudit embrayage; un moyen d'établissement (104) de pression d'application initiale pour établir une pression d'application initiale en fonction de la pression de début d'application qui est détectée par ledit moyen de détection de pression de début d'application; et un moyen de réglage (103) de pression d'huile pour régler la pression d'huile à transmettre audit servomécanisme hydraulique (C-1), lorsqu'un changement est effectué à ladite gamme de marche avant, puis l'augmenter progressivement,

**caractérisé par** un module de transmission de fluide agencé entre ledit moteur et ledit embrayage; un moyen de détection (49) de régime d'entrée pour détecter le régime d'entrée dudit module de transmission de fluide; un moyen de détection (47) de régime de sortie pour détecter le régime de sortie dudit module de transmission de fluide; et un moyen de détection d'état d'arrêt pour détecter un état d'arrêt de véhicule dans lequel ladite gamme de marche avant est sélectionnée, dans lequel l'ouverture de papillon est complètement fermée, dans lequel la pédale de frein est enfoncée et dans lequel la vitesse du véhicule est sensiblement nulle,

dans lequel ledit module de commande (41) comporte : un moyen de calcul pour calculer la différence de rotation entre ledit régime d'entrée et ledit régime de sortie; un moyen de débrayage pour relâcher ledit embrayage (C1) en abaissant la pression d'huile à transmettre audit servomécanisme hydraulique (C-1) jusqu'à ce que la rétraction du piston dudit servomécanisme hydraulique commence, si ledit état d'arrêt du véhicule est détecté; et un moyen de maintien d'état de débrayage spécifique pour maintenir l'état situé immédiatement avant le transfert dudit embrayage d'une région de résistance à une région de glissement, jusqu'à ce que ledit état d'arrêt de véhicule ne soit plus détecté après le relâchement dudit embrayage; en ce que ledit moyen de maintien d'état de débrayage spécifique comporte : un moyen surpresseur pour accroître la pression d'huile à transmettre audit servomécanisme hydraulique, d'une pression établie à moins que le taux de variation de ladite différence de rotation n'excède un taux de variation de référence même après l'écoulement d'un temps établi; et un premier moyen de réduction de pression pour abaisser la pression d'huile à transmettre audit servomécanisme hydraulique, d'une pression établie si ledit taux de variation excède le taux de référence quel que soit l'écoulement dudit temps établi et si la différence de rotation augmente; et en ce que ledit moyen de détection (101) de pression de début d'application détecte, lorsque la pression d'huile à transmettre audit servomécanisme hydraulique est élevée, d'une pression établie, par ledit moyen surpresseur puis abaissée, d'une pression établie, par ledit premier moyen de réduction de pression, la pression d'huile avant réduction, comme dite pression de début d'application.

**2.** Système de commande pour transmission automatique selon la revendication 1,

dans lequel ledit taux de variation de référence est établi à une valeur comprise entre un taux de variation standard lorsque ledit embrayage est dans la région de résistance et un taux de variation standard lorsque ledit embrayage est dans la région de glissement.

**3.** Système de commande pour transmission automatique selon la revendication 1 ou 2,

dans lequel ledit temps établi est établi de façon à correspondre à un temps où la pression d'huile à transmettre au servomécanisme hydraulique est changée, jusqu'à ce que le taux de variation réel de la pression d'huile prenne fin.

**4.** Système de commande pour transmission automatique selon la revendication 1, 2 ou 3,

dans lequel ledit moyen de débrayage comporte un second moyen de réduction de pression pour réduire la pression d'huile à transmettre audit servomécanisme hydraulique si ledit taux de variation excède le taux de variation de référence et si ladite différence de rotation diminue.

**5.** Système selon l'une quelconque des revendications 1 à 4, comprenant en outre un moyen de détection de couple (49) pour détecter le couple de sortie fourni par ledit moteur,

dans lequel ledit moyen d'établissement (104) de pression d'application initiale applique une pression supplémentaire, réglée pour être la plus élevée pour le couple de sortie le plus élevé, à ladite pression de début d'application.

**6.** Système selon l'une quelconque des revendications 1 à 5, comprenant en outre un moyen de détection (46) de température d'huile pour détecter une température d'huile,

dans lequel ledit moyen d'établissement (104) de pression d'application initiale applique une pression supplémentaire, réglée pour être la plus faible pour la température d'huile la plus élevée, à ladite pression de début d'application.

**7.** Système selon l'une quelconque des revendications 1 à 6, comprenant en outre un moyen de détection d'application pour détecter le début de l'application dudit embrayage,

dans lequel ledit moyen de réglage (103) de pression d'huile établit la pression d'huile à transmettre audit servomécanisme hydraulique, à ladite pression d'application initiale jusqu'à ce que le début de l'application soit détecté par ledit moyen de détection d'application, et l'augmente progressivement à partir de la pression d'application initiale.

FIG. 1

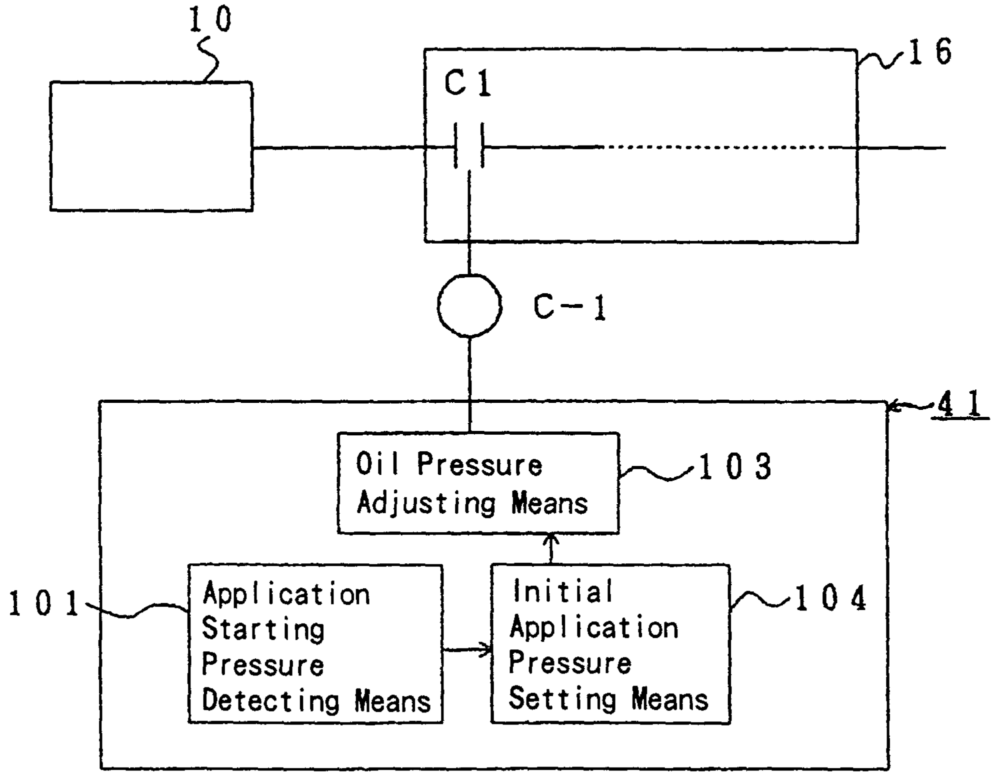
10
16
C1
C-1
41
Oil Pressure
Adjusting Means
103
101
Application
Starting
Pressure
Detecting Means
Initial
Application
Pressure
Setting Means
104

FIG. 2

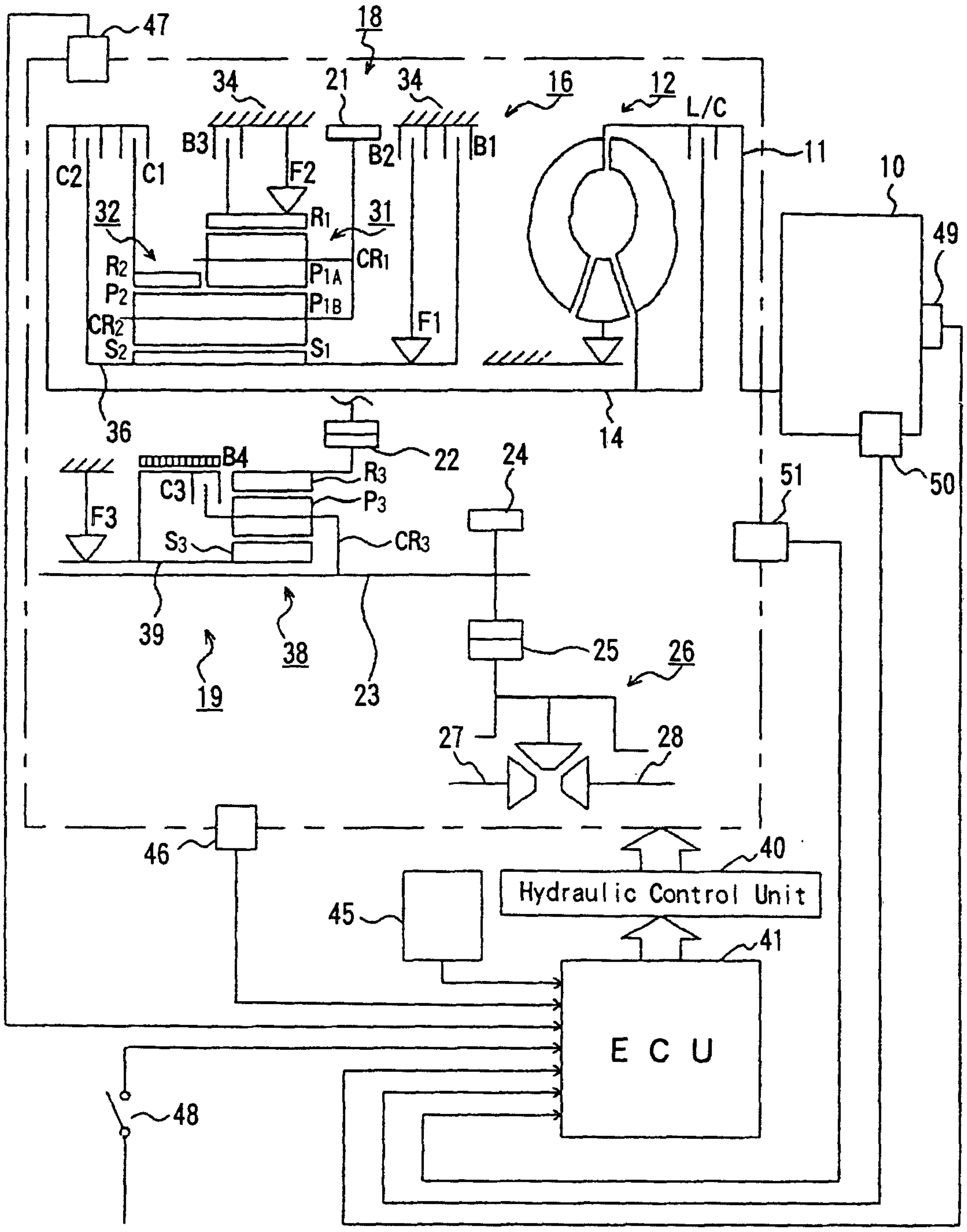
18
47
34
21
34
16
12
L/C
B3
B2
B1
11
C2
C1
F2
10
32
R1
31
49
R2
CR1
P1A
P2
P1B
CR2
F1
S2
S1
36
14
22
B4
24
R3
51
C3
P3
50
F3
S3
CR3
39
38
23
25
26
19
27
28
46
40
Hydraulic Control Unit
45
41
E C U
48

FIG. 3

| | | Solenoid | | | Clutch | | | Brake | | | | One-Way Clutch | | |
|---|---|---|---|---|---|---|---|---|---|---|---|---|---|---|
| | | S1 | S2 | S3 | C1 | C2 | C3 | B1 | B2 | B3 | B4 | F1 | F2 | F3 |
| R | | × | ○ | × | × | ○ | × | × | × | ○ | ○ | × | × | × |
| N | | × | ○ | × | × | × | × | × | × | × | ○ | × | × | × |
| D | 1 ST | × | ○ | △ | ○ | × | × | × | × | (○) | ○ | × | ○ | ○ |
| | 2 ND | ○ | ○ | △ | ○ | × | × | ○ | ○ | × | ○ | ○ | × | ○ |
| | 3 RD | ○ | × | × | ○ | × | ○ | ○ | ○ | × | × | ○ | × | × |
| | 4 TH | × | × | × | ○ | ○ | ○ | × | ○ | × | × | × | × | × |

FIG. 4

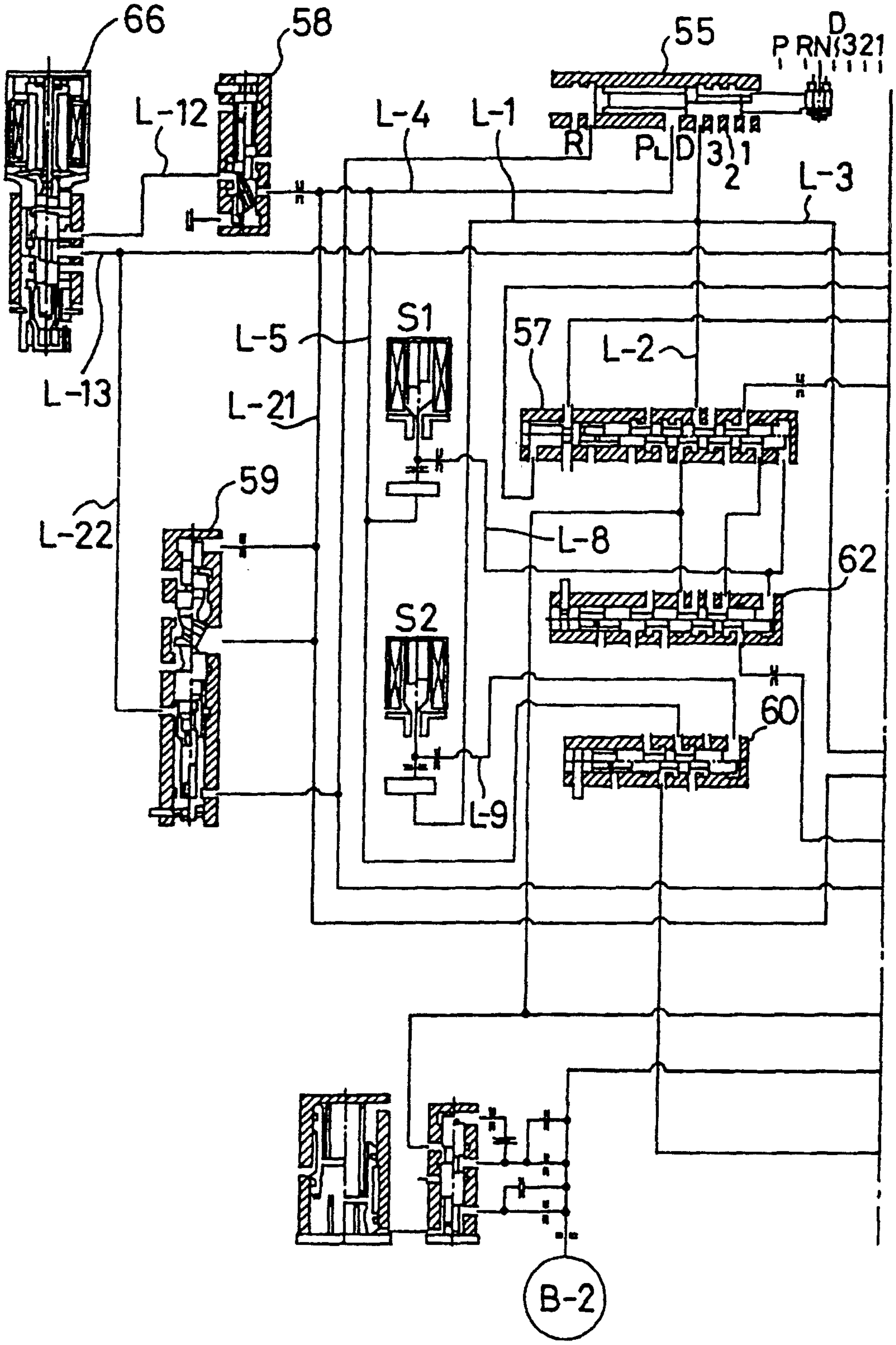
66
58
55
P RN D 3 2 1
L-12
L-4
L-1
R
PL D 3 2 1
L-3
L-13
L-5
S1
57
L-2
L-21
L-22
59
L-8
62
S2
60
L-9
B-2

FIG. 5

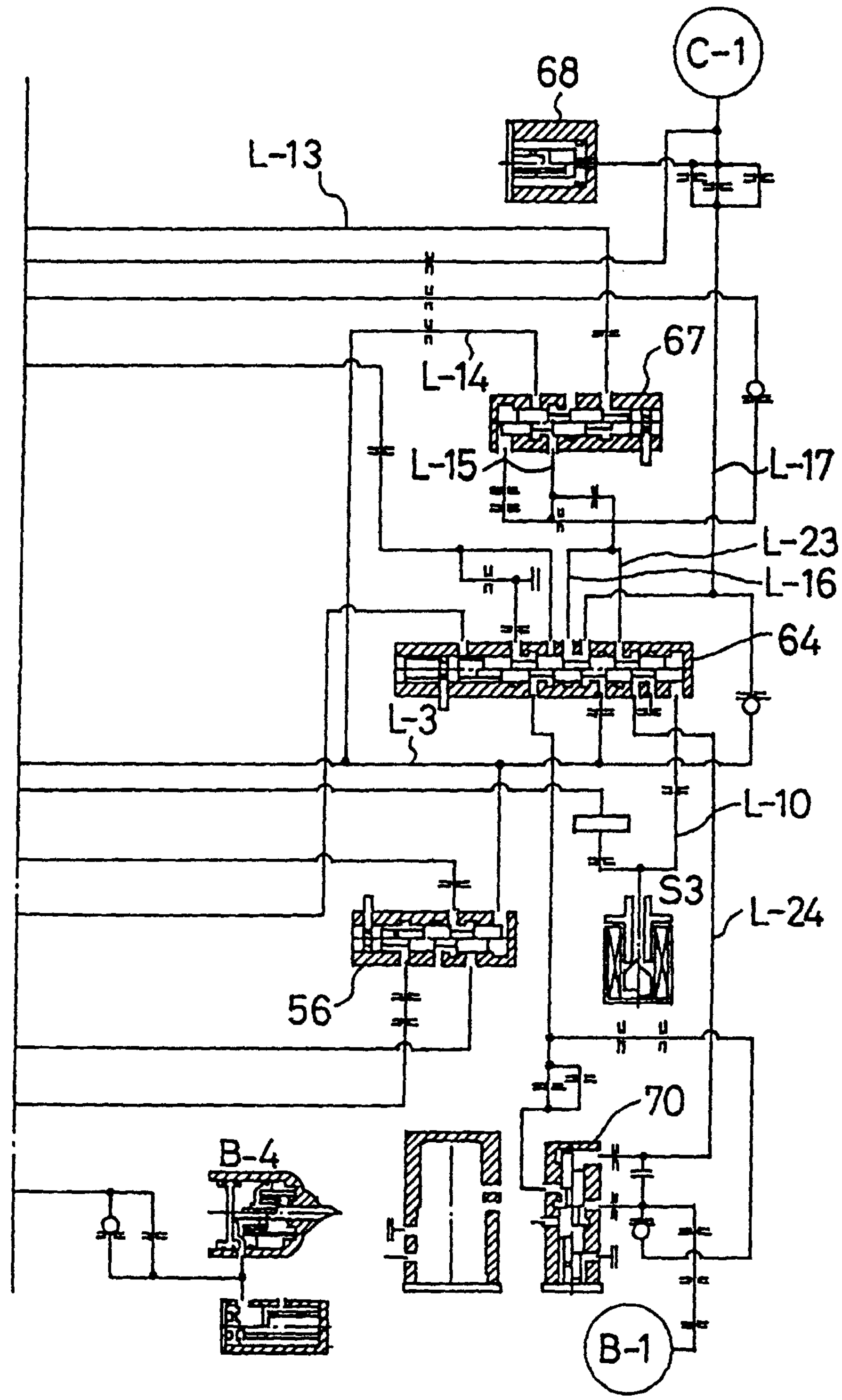

FIG. 6

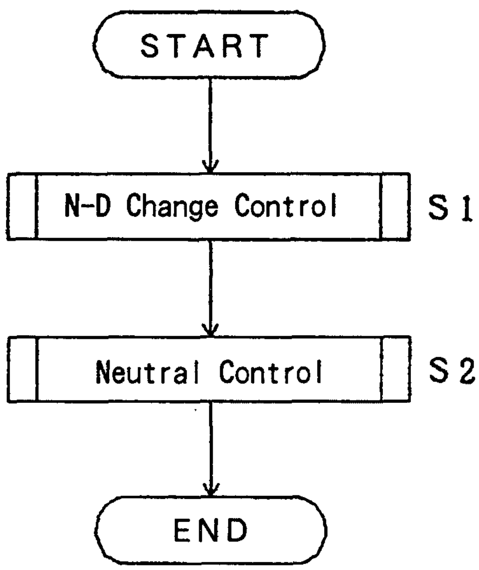

FIG. 7

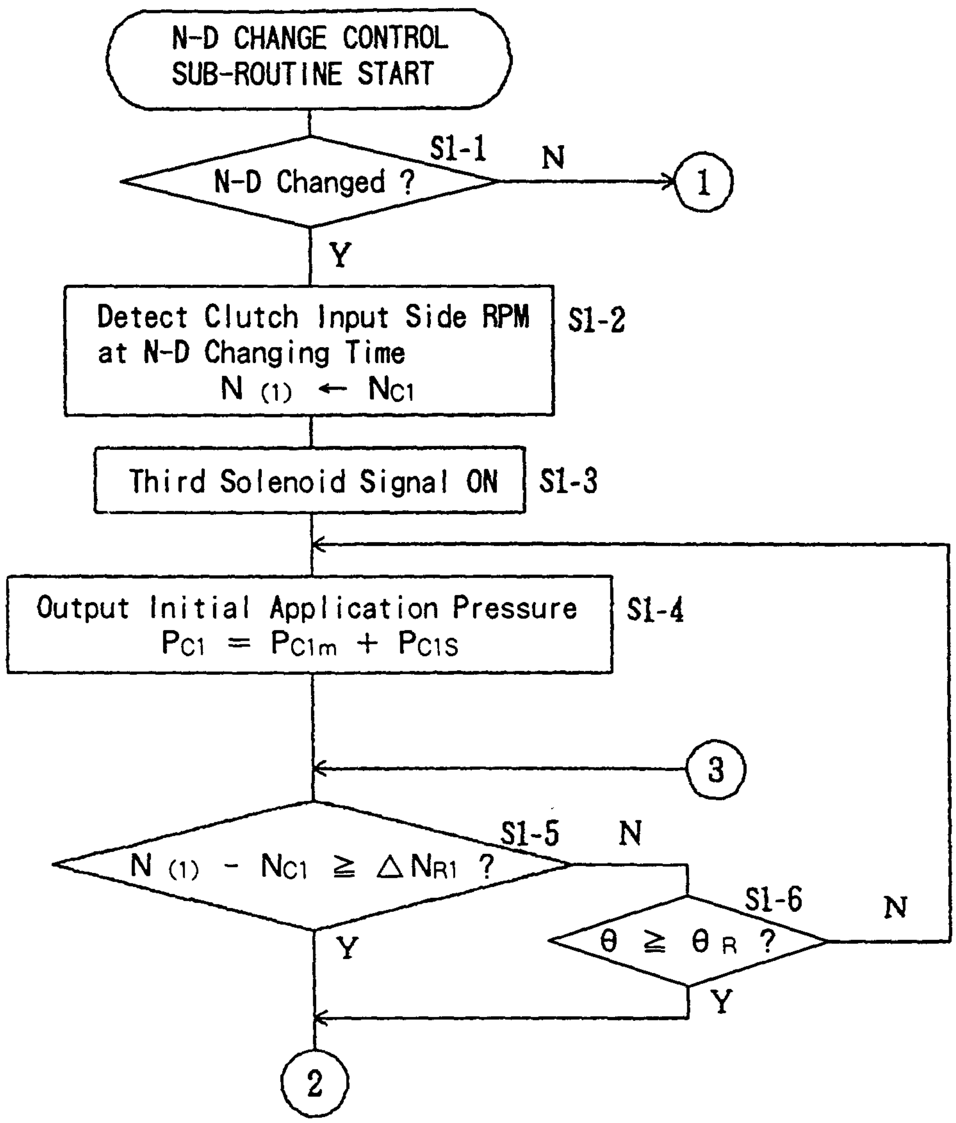
N-D CHANGE CONTROL SUB-ROUTINE START
S1-1
N-D Changed ?
N
1
Y
Detect Clutch Input Side RPM at N-D Changing Time
N (1) ← NC1
S1-2
Third Solenoid Signal ON
S1-3
Output Initial Application Pressure
PC1 = PC1m + PC1S
S1-4
3
S1-5
N (1) - NC1 ≧ △NR1 ?
N
Y
S1-6
θ ≧ θR ?
N
Y
2

FIG. 8

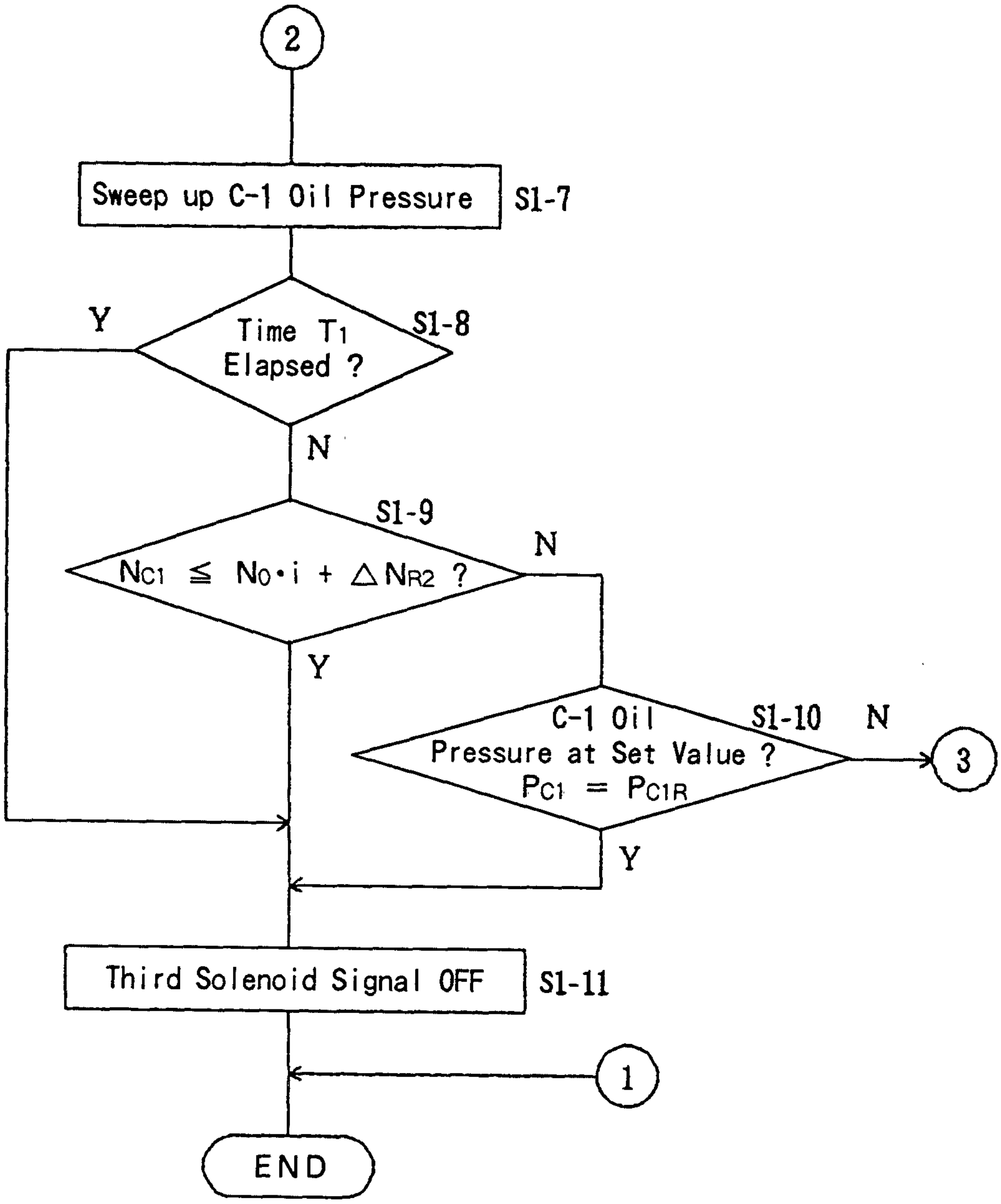
2
Sweep up C-1 Oil Pressure
S1-7
Time $T_1$ Elapsed ?
S1-8
Y
N
S1-9
$N_{C1} \leqq N_0 \cdot i + \triangle N_{R2}$ ?
N
Y
C-1 Oil Pressure at Set Value ? $P_{C1} = P_{C1R}$
S1-10
N
3
Y
Third Solenoid Signal OFF
S1-11
1
END

FIG. 9

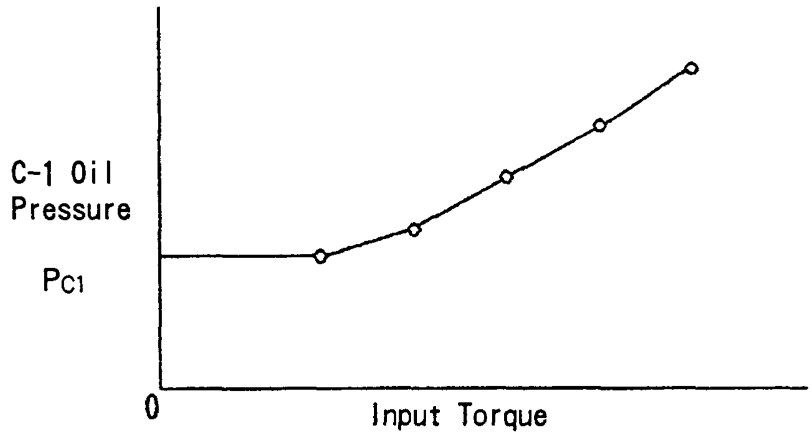


FIG. 10

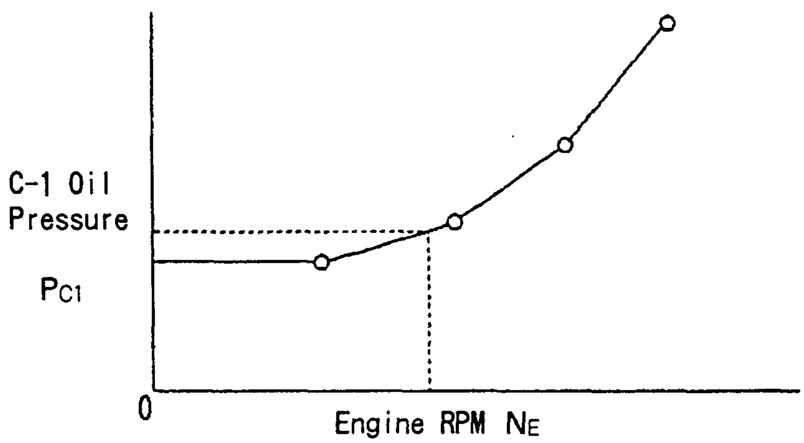


FIG. 11

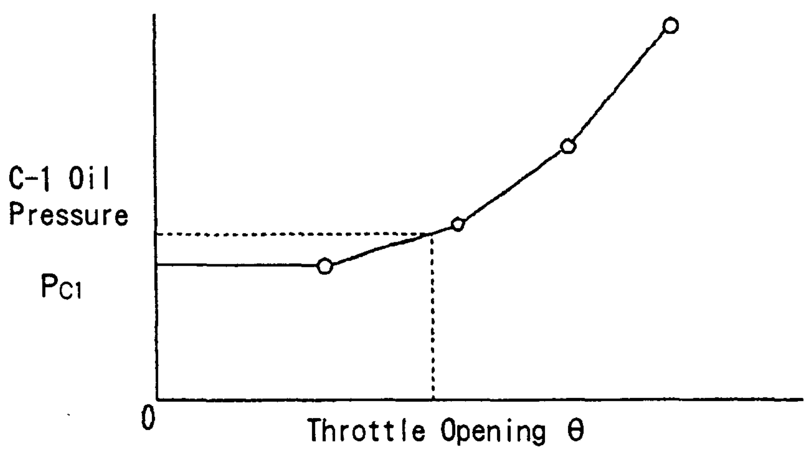

FIG. 12

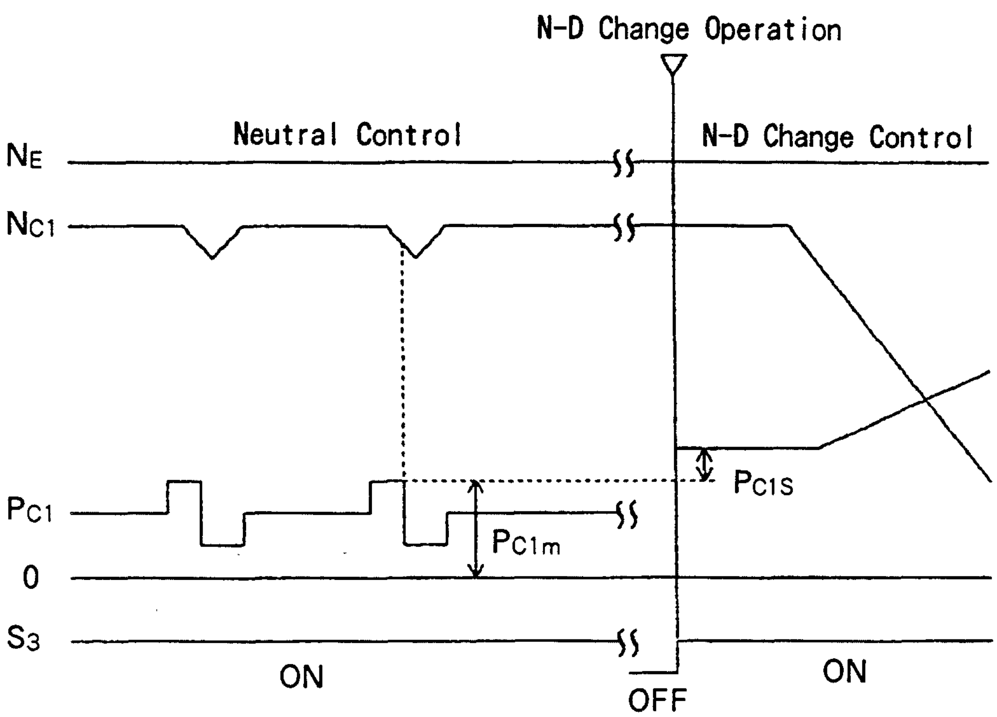
N-D Change Operation
Neutral Control
N-D Change Control
NE
NC1
PC1S
PC1
PC1m
0
S3
ON
OFF
ON

FIG. 13

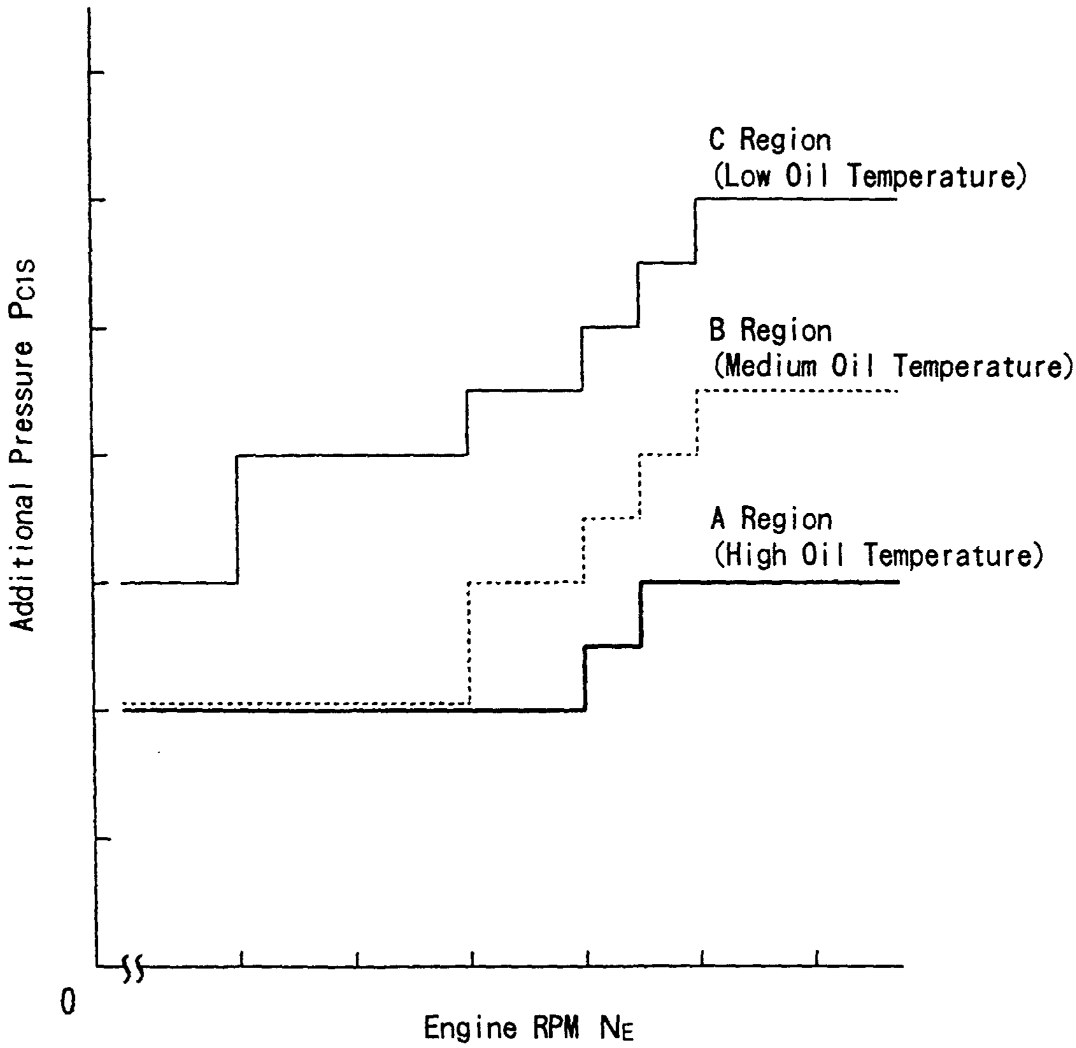
C Region
(Low Oil Temperature)
B Region
(Medium Oil Temperature)
A Region
(High Oil Temperature)
Additional Pressure $P_{C1S}$
0
Engine RPM $N_E$

FIG. 14

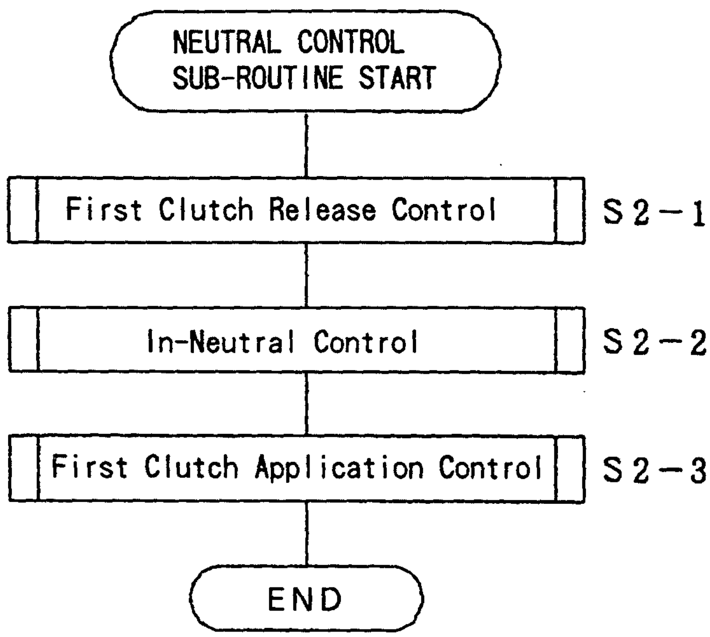
NEUTRAL CONTROL SUB-ROUTINE START
First Clutch Release Control
S2-1
In-Neutral Control
S2-2
First Clutch Application Control
S2-3
END

FIG. 15

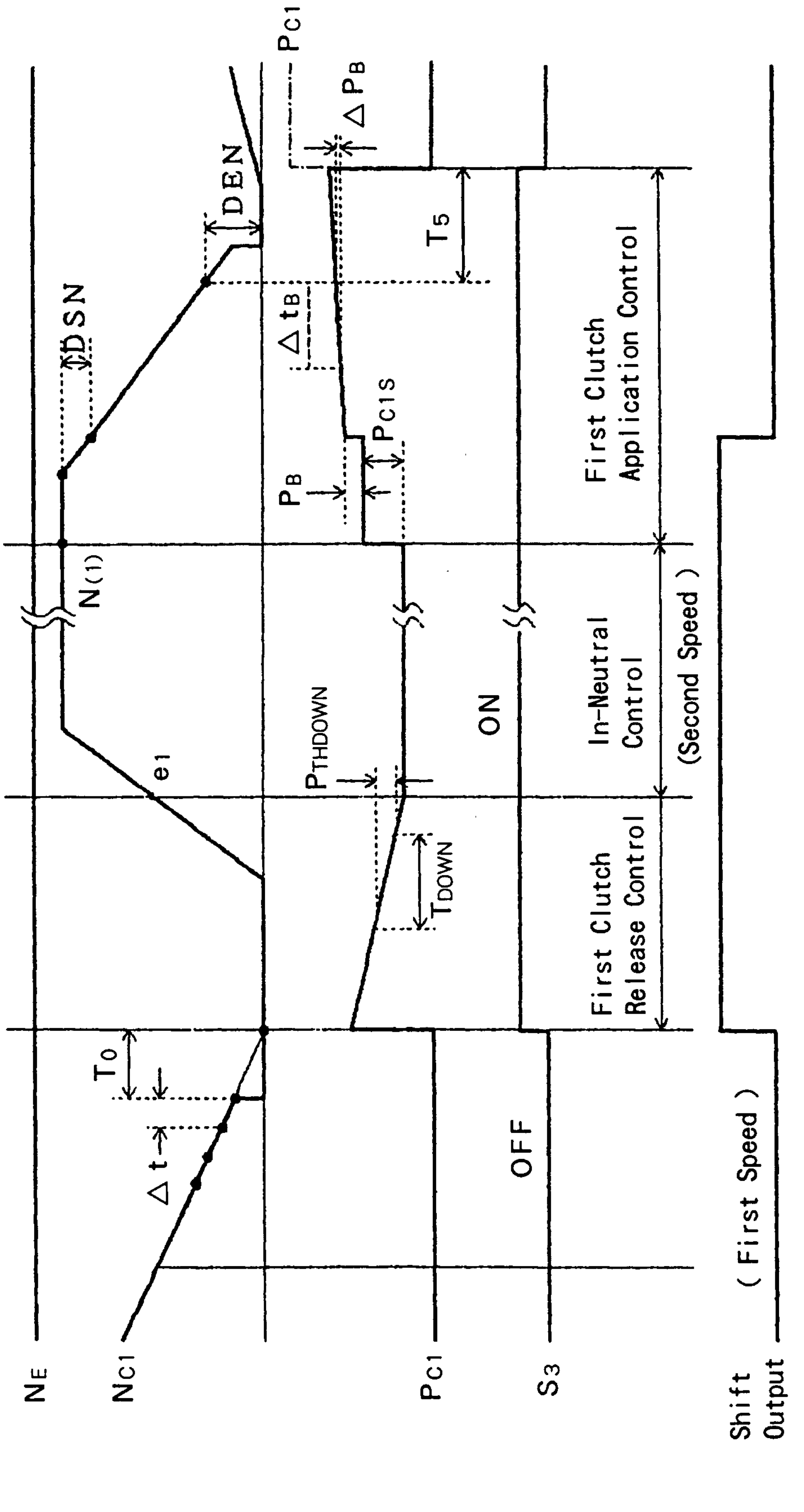
NE
NC1
PC1
S3
Shift Output
PC1
ΔPB
DEN
DSN
Δ tB
T5
PC1S
PB
N(1)
e1
PTHDOWN
TDOWN
T0
Δ t
OFF
ON
First Clutch Application Control
In-Neutral Control
(Second Speed)
First Clutch Release Control
(First Speed)

FIG. 16

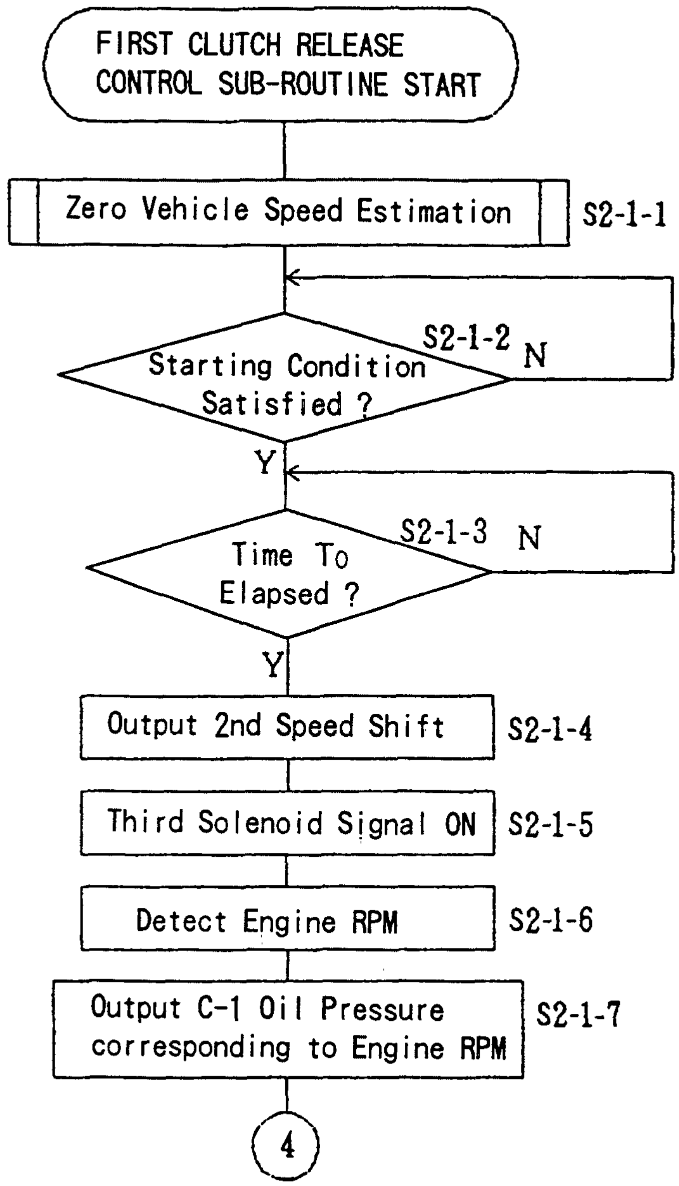
FIRST CLUTCH RELEASE CONTROL SUB-ROUTINE START
Zero Vehicle Speed Estimation
S2-1-1
Starting Condition Satisfied ?
S2-1-2
N
Y
Time To Elapsed ?
S2-1-3
N
Y
Output 2nd Speed Shift
S2-1-4
Third Solenoid Signal ON
S2-1-5
Detect Engine RPM
S2-1-6
Output C-1 Oil Pressure corresponding to Engine RPM
S2-1-7
4

FIG. 17

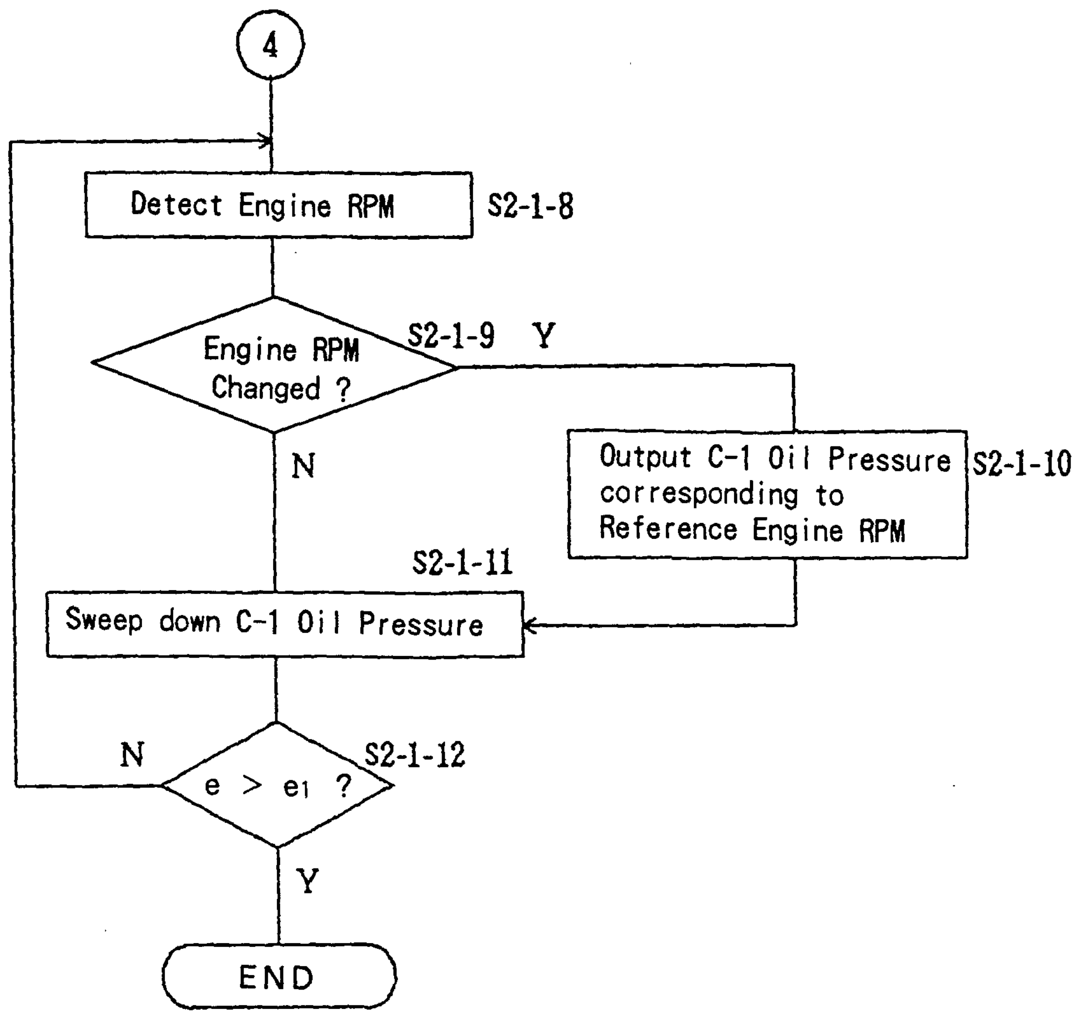
4
Detect Engine RPM
S2-1-8
Engine RPM
Changed ?
S2-1-9
Y
N
Output C-1 Oil Pressure
corresponding to
Reference Engine RPM
S2-1-10
S2-1-11
Sweep down C-1 Oil Pressure
N
e > e1 ?
S2-1-12
Y
END

FIG. 18

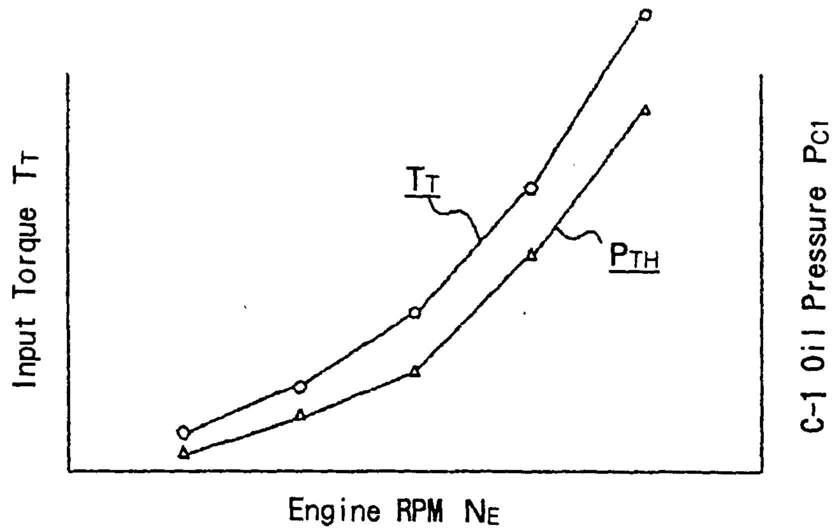
Input Torque $T_T$
$T_T$
$P_{TH}$
C-1 Oil Pressure $P_{C1}$
Engine RPM $N_E$

FIG. 19

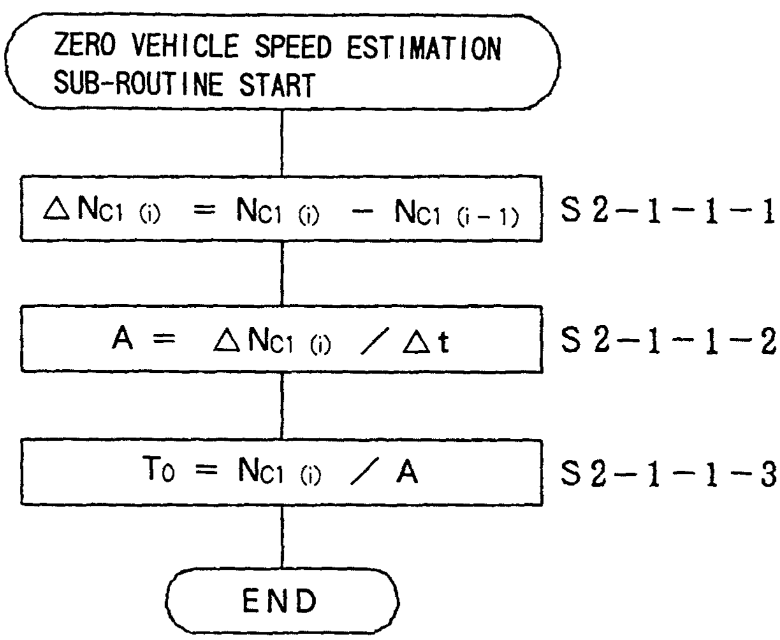
ZERO VEHICLE SPEED ESTIMATION SUB-ROUTINE START
$\Delta N_{C1(i)} = N_{C1(i)} - N_{C1(i-1)}$
S2-1-1-1
$A = \Delta N_{C1(i)} / \Delta t$
S2-1-1-2
$T_0 = N_{C1(i)} / A$
S2-1-1-3
END

FIG. 20

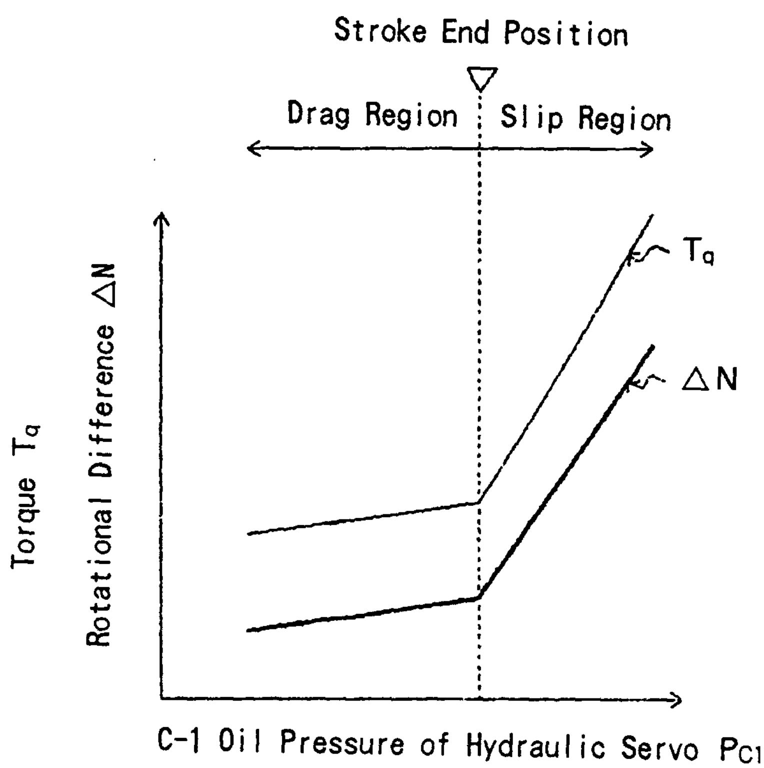

Stroke End Position
Drag Region
Slip Region
Torque Tq
Rotational Difference ΔN
Tq
ΔN
C-1 Oil Pressure of Hydraulic Servo Pc1

FIG. 21

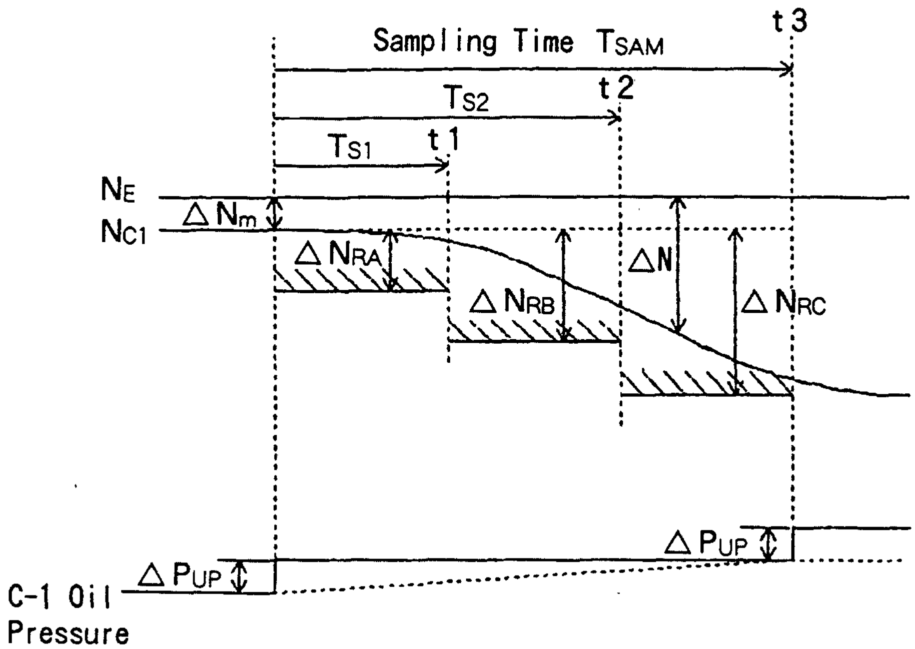
t3
Sampling Time TSAM
TS2
t2
TS1
t1
NE
△Nm
NC1
△NRA
△NRB
△N
△NRC
△PUP
△PUP
C-1 Oil
Pressure

FIG. 22

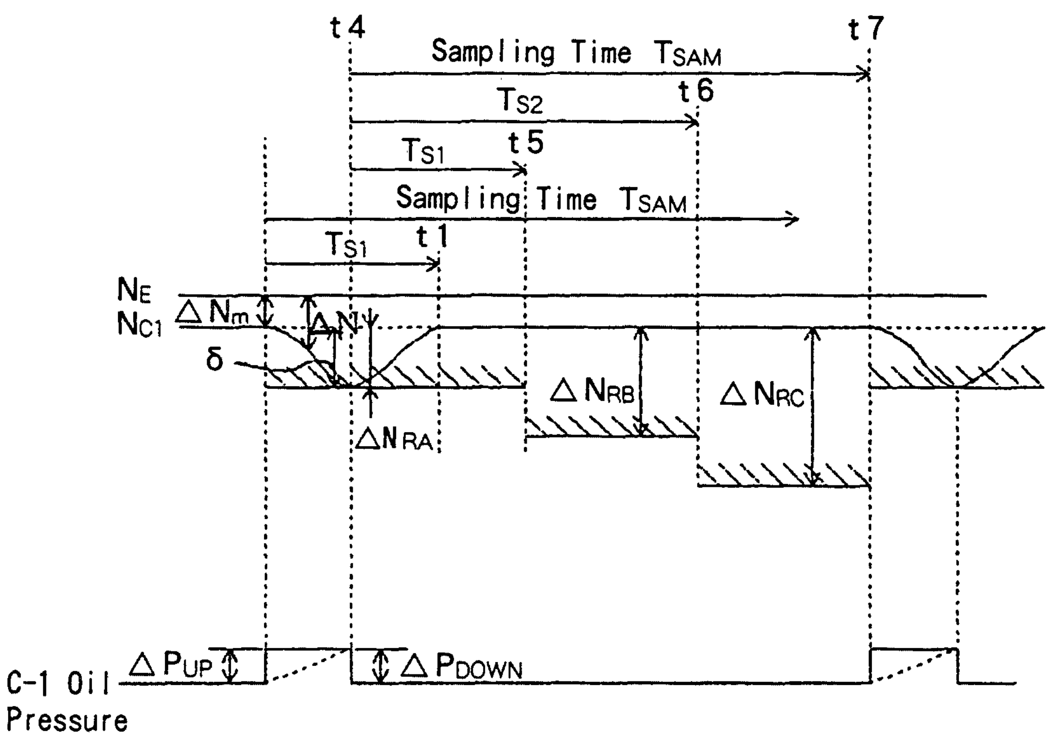
t4
t7
Sampling Time TSAM
TS2
t6
TS1
t5
Sampling Time TSAM
TS1
t1
NE
△Nm
NC1
△N
δ
△NRA
△NRB
△NRC
△PUP
△PDOWN
C-1 Oil
Pressure

FIG. 23

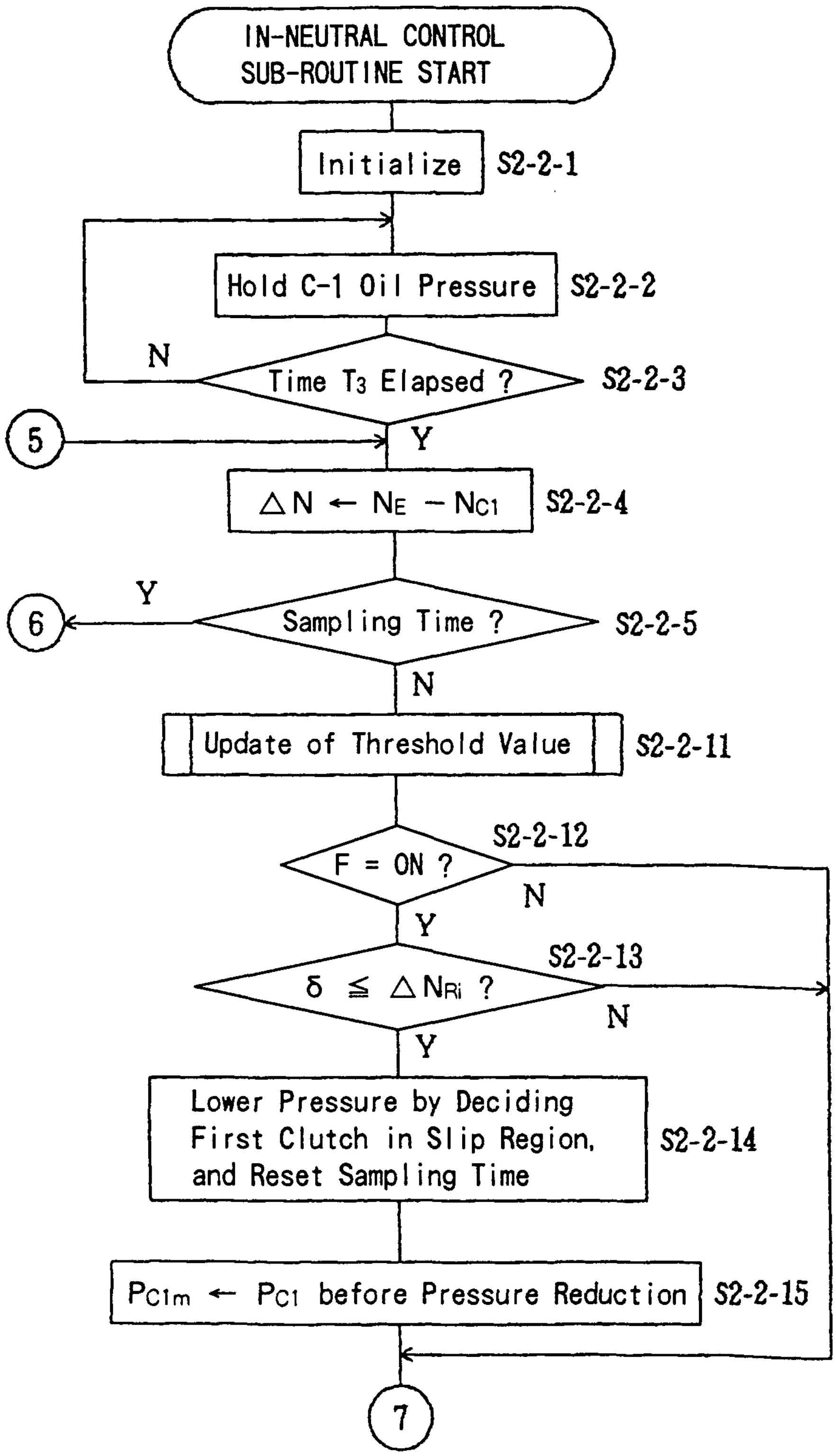
IN-NEUTRAL CONTROL SUB-ROUTINE START
Initialize
S2-2-1
Hold C-1 Oil Pressure
S2-2-2
Time $T_3$ Elapsed ?
S2-2-3
N
Y
5
$\Delta N \leftarrow N_E - N_{C1}$
S2-2-4
Sampling Time ?
S2-2-5
Y
6
N
Update of Threshold Value
S2-2-11
F = ON ?
S2-2-12
N
Y
$\delta \leqq \Delta N_{Ri}$ ?
S2-2-13
N
Y
Lower Pressure by Deciding First Clutch in Slip Region, and Reset Sampling Time
S2-2-14
$P_{C1m} \leftarrow P_{C1}$ before Pressure Reduction
S2-2-15
7

FIG. 24

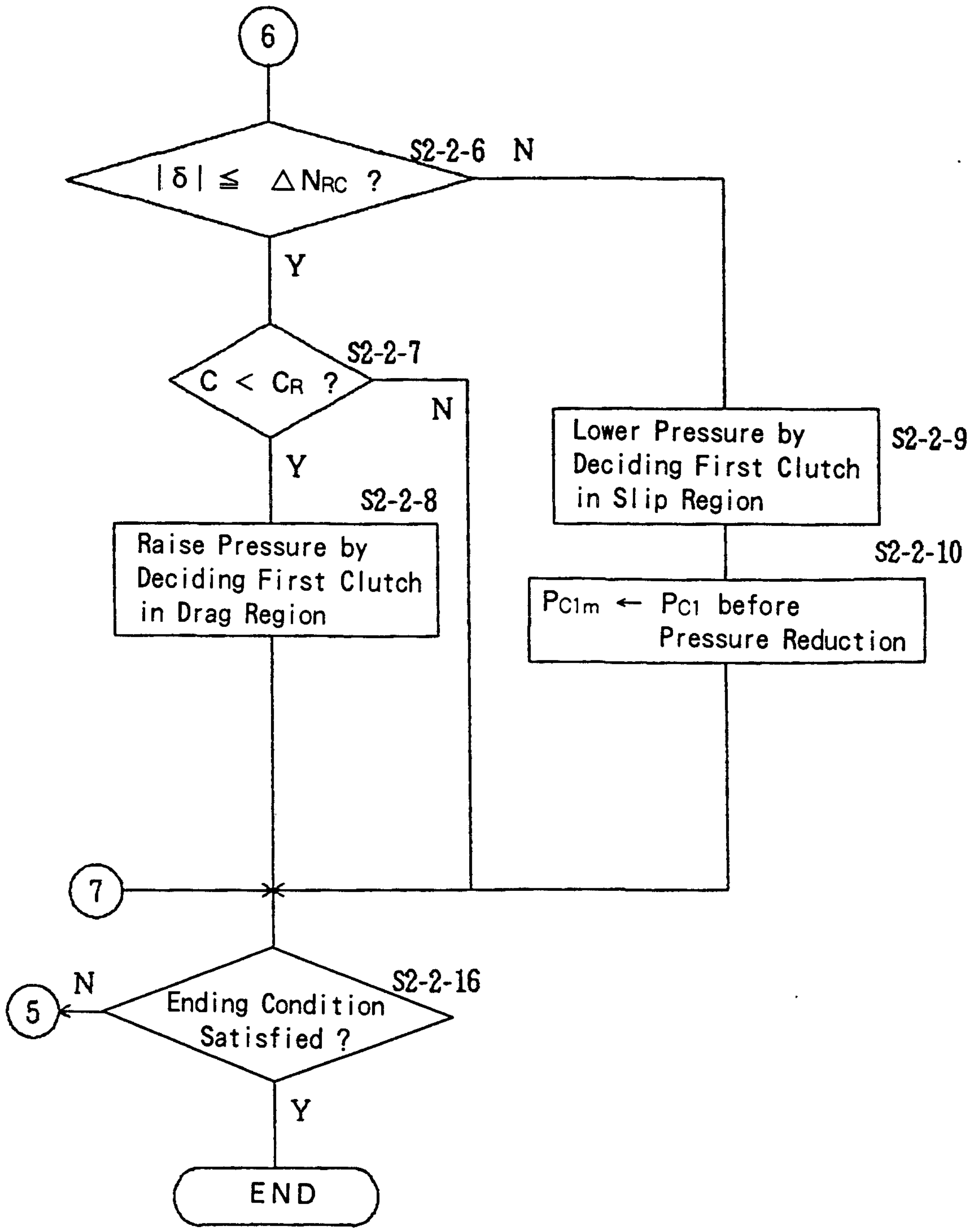
6
S2-2-6
N
|δ| ≦ ΔNRC ?
Y
S2-2-7
C < CR ?
N
Y
S2-2-8
Raise Pressure by Deciding First Clutch in Drag Region
Lower Pressure by Deciding First Clutch in Slip Region
S2-2-9
S2-2-10
PC1m ← PC1 before Pressure Reduction
7
N
5
S2-2-16
Ending Condition Satisfied ?
Y
END

FIG. 25

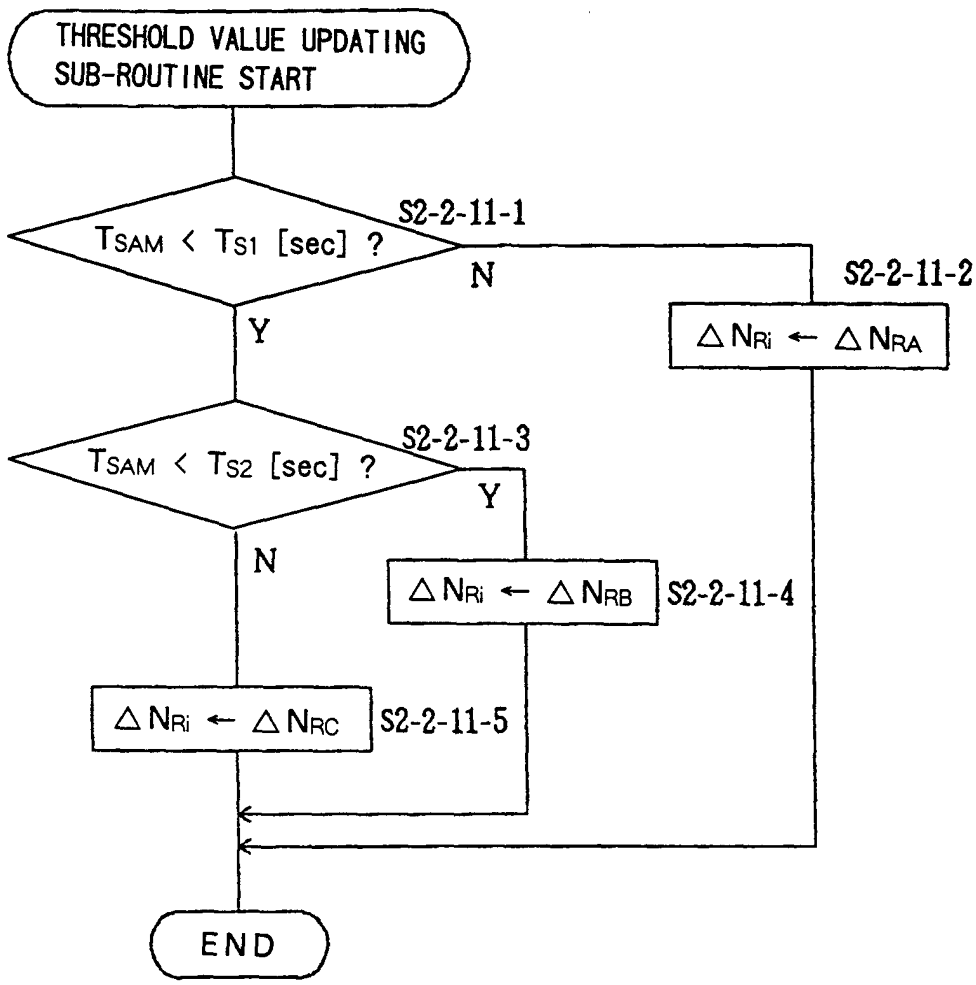
THRESHOLD VALUE UPDATING
SUB-ROUTINE START
S2-2-11-1
TSAM < TS1 [sec] ?
N
Y
S2-2-11-2
△NRi ← △NRA
S2-2-11-3
TSAM < TS2 [sec] ?
Y
N
△NRi ← △NRB
S2-2-11-4
△NRi ← △NRC
S2-2-11-5
END

FIG. 26

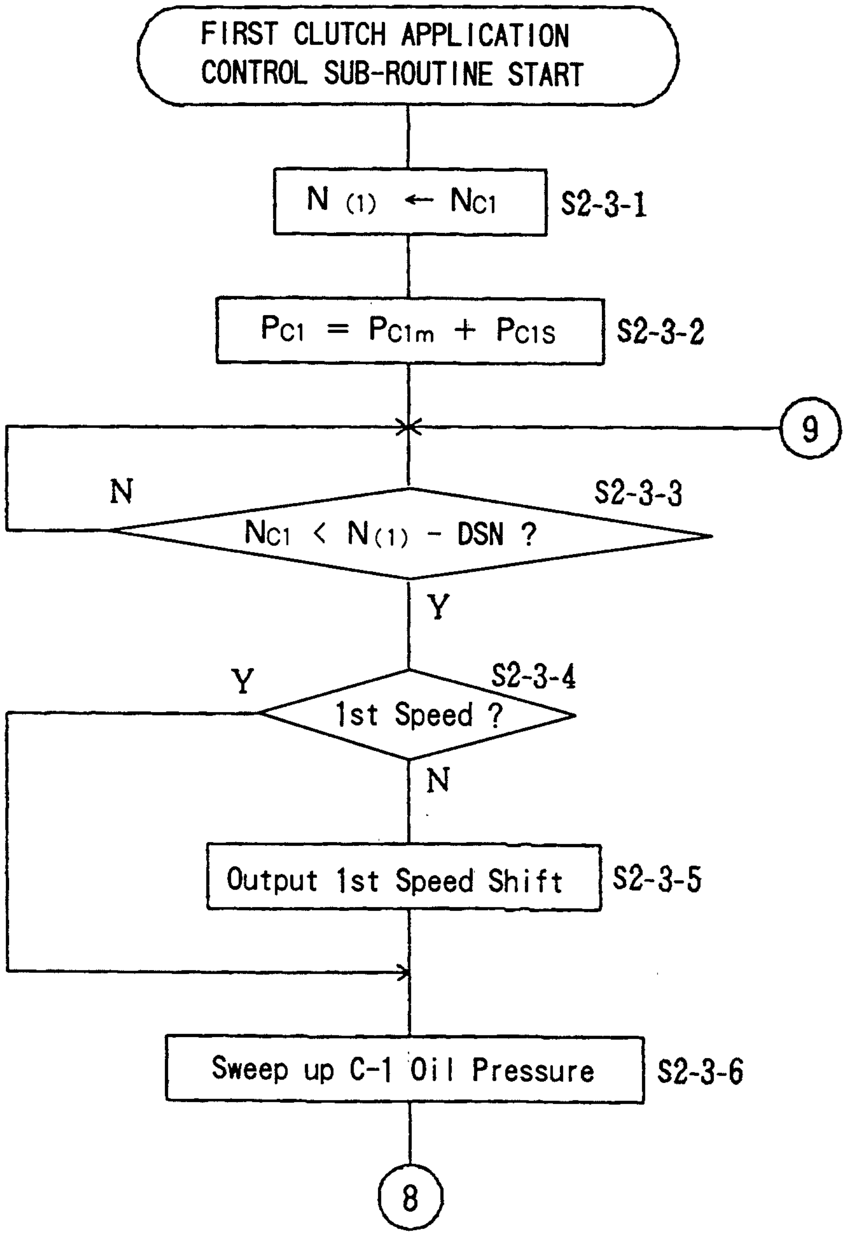
FIRST CLUTCH APPLICATION
CONTROL SUB-ROUTINE START
N (1) ← NC1
S2-3-1
PC1 = PC1m + PC1S
S2-3-2
9
N
S2-3-3
NC1 < N(1) - DSN ?
Y
Y
S2-3-4
1st Speed ?
N
Output 1st Speed Shift
S2-3-5
Sweep up C-1 Oil Pressure
S2-3-6
8

FIG. 27

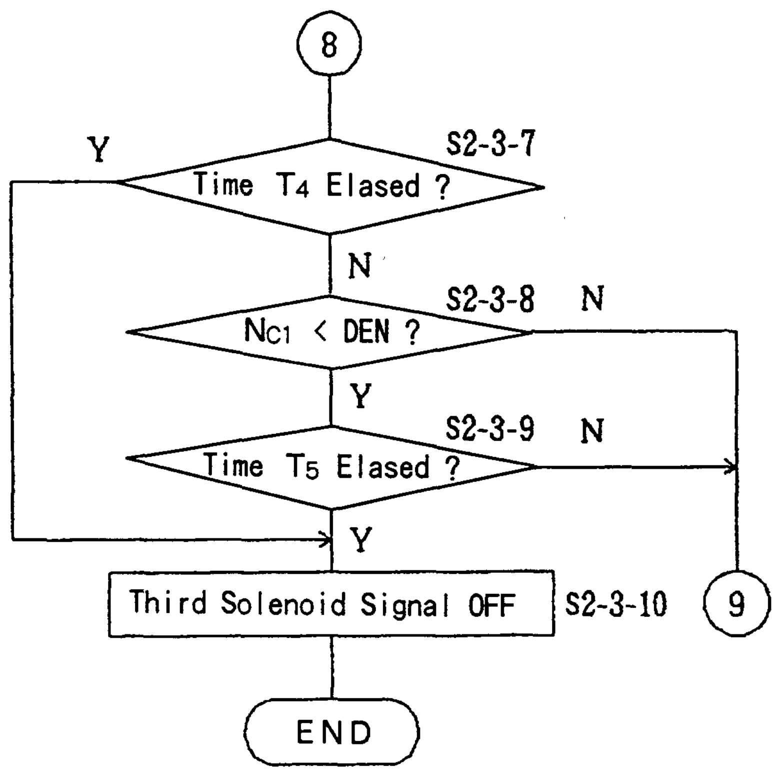
8
Y
S2-3-7
Time T4 Elased ?
N
S2-3-8
N
NC1 < DEN ?
Y
S2-3-9
N
Time T5 Elased ?
Y
Third Solenoid Signal OFF
S2-3-10
9
END

FIG. 28

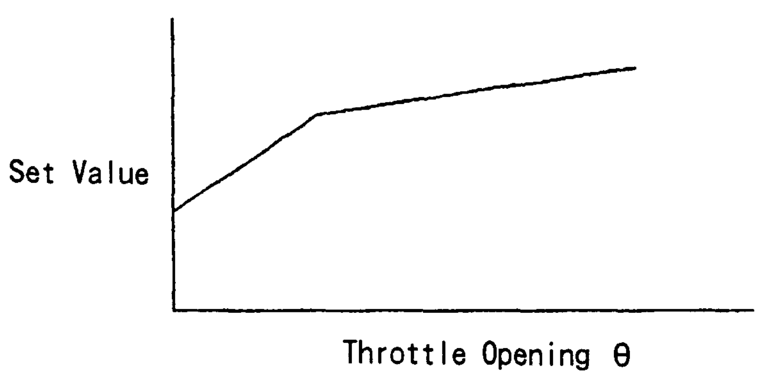
Set Value
Throttle Opening θ